(19) Europäisches Patentamt / European Patent Office / Office européen des brevets

(11) **EP 2 690 479 A1**

(12) **EUROPEAN PATENT APPLICATION**
published in accordance with Art. 153(4) EPC

(43) Date of publication:
**29.01.2014 Bulletin 2014/05**

(51) Int Cl.:
***G02B 13/02*** (2006.01)   ***G02B 13/18*** (2006.01)

(21) Application number: **12763578.7**

(22) Date of filing: **06.03.2012**

(86) International application number:
**PCT/JP2012/001540**

(87) International publication number:
**WO 2012/132247 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2011 JP 2011068209**

(71) Applicant: **Konica Minolta, Inc.**
**Tokyo 100-7015 (JP)**

(72) Inventors:
• **YAMADA, Keiko**
**Chiyoda-ku**
**Tokyo 100-7015 (JP)**
• **NISHIDA, Maiko**
**Chiyoda-ku**
**Tokyo 100-7015 (JP)**

(74) Representative: **HOFFMANN EITLE**
**Patent- und Rechtsanwälte**
**Arabellastrasse 4**
**81925 München (DE)**

(54) **IMAGE OPTICAL SYSTEM, IMAGING DEVICE, AND DIGITAL APPARATUS**

(57)   The imaging optical system has a first positive lens element convex toward the object side, a second negative lens element concave toward the image side, a third lens element having both surfaces with a region, in which the lens section is located on the object side than the intersection with the optical axis, a fourth positive lens element convex toward the image side with at least one surface having an aspherical shape and inflection points, and a fifth negative lens element concave toward the image side.

The optical system satisfies the expressions:

$$0.5 < |f1/f| < 0.67, \ 0.3 < |f4/f| < 0.63$$

The third lens element satisfies the expressions:

$$-0.4 < f/R1\_L3 < 0.2, \ -0.6 < f/R2\_L3 < 0.05$$

where f, f1, f4 denote focal lengths of the entire system, the first lens element, and the fourth lens element, and R1_L3, R2_L3 denote paraxial diameters of the object-side surface and the image-side surface of the third lens element.

FIG. 1

Printed by Jouve, 75001 PARIS (FR)

**Description**

**TECHNICAL FIELD**

The present invention relates to an imaging optical system, and more particularly to an imaging optical system suitably applied to a solid-state imaging element such as a CCD image sensor or a CMOS image sensor. The present invention further relates to an imaging device incorporated with the imaging optical system, and a digital apparatus loaded with the imaging device.

**BACKGROUND ART**

In recent years, as high performance and miniaturization of an imaging element i.e. a solid-state imaging element such as a CCD (Charged Coupled Device) image sensor or a CMOS (Complementary Metal Oxide Semiconductor) image sensor have developed, digital apparatuses such as mobile phones or personal digital assistants incorporated with an imaging device using such an imaging element have been widely spread. There is also an increasing demand for miniaturization and high performance of an imaging optical system (imaging lens) for forming an optical image of an object on a light receiving surface of the solid-state imaging element to be loaded in such an imaging device. Conventionally, there has been proposed an optical system provided with three lens elements or four lens elements, as an imaging optical system for such use. In recent years, in addition to the above, there is also proposed an optical system provided with five lens elements in view of possibility of higher performance.

Such an imaging optical system is disclosed in patent literature 1 and in patent literature 2, for instance. The imaging lens disclosed in patent literature 1 is an imaging lens configured to form an object image on a photoelectric conversion portion of a solid-state imaging element. The imaging lens is constituted of, in the order from the object side, a first lens element having a positive refractive power and having a convex surface toward the object side, an aperture stop, a second lens element having a negative refractive power and having a concave surface toward the image side, a third lens element having a positive or negative refractive power, a fourth lens element having a positive refractive power and having a convex surface toward the image side, and a fifth lens element having a negative refractive power and having a concave surface toward the image side. The image-side surface of the fifth lens element has an aspherical shape, and has an inflection point at a position other than the intersection with the optical axis. The imaging lens satisfies the conditional expression: $0.50 < f1/f < 0.85$, where f1 denotes a focal length of the first lens element, and f denotes a focal length of the entire optical system. The thus configured imaging lens is provided with five lens elements. Patent literature 1 discloses that the imaging lens is advantageous in correcting various aberrations in a satisfactory manner while achieving miniaturization, as compared with a conventional configuration (in patent literature 1, the optical system disclosed in JP 2007-264180A or JP 2007-279282A) (see the paragraphs [0012] to [0014] of patent literature 1, for instance).

Further, the imaging lens disclosed in patent literature 2 is an imaging lens configured to form an object image on a photoelectric conversion portion of a solid-state imaging element. The imaging lens is constituted of, in the order from the object side, a first lens element having a positive refractive power and having a convex surface toward the object side, a second lens element having a negative refractive power and having a concave surface toward the image side, a third lens element having a positive refractive power and having a convex surface toward the image side, a fourth lens element in the form of a meniscus lens, having a positive refractive power, and having a convex surface toward the image side, and a fifth lens element having a negative refractive power and having a concave surface toward the image side. The image-side surface of the fifth lens element has an aspherical shape, and has an inflection point at a position other than the intersection with the optical axis. An aperture stop is disposed on the image side than the first lens element. The imaging lens satisfies the conditional expression: $0.8 < f3/f1 < 2.6$, where f1 denotes a focal length of the first lens element, and f3 denotes a focal length of the third lens element. The thus configured imaging lens is provided with five lens elements. Patent literature 2 discloses that the imaging lens is advantageous in correcting various aberrations in a satisfactory manner while achieving miniaturization, as compared with a conventional configuration (in patent literature 2, the optical system disclosed in JP 2007-264180A or JP 2007-279282A) (see the paragraphs [0012] to [0015] of patent literature 2, for instance).

The conventional imaging lens has a drawback that the resolution of an image at a peripheral image height position may be lowered when focusing is performed from an infinite distance object to a near distance object. This is because a focusing lens for focusing is moved toward the object side during a focusing operation, and consequently, the light flux passing position at each of the lens elements constituting the imaging lens varies. In particular, regarding a lens element disposed at a position far from the aperture stop, passing positions of light fluxes (light fluxes formed in the case where a focusing operation is performed at different distance positions from each other, for instance, a light flux obtained in the case where an image is defocused, and a light flux obtained in the case where an image is focused) on the lens element greatly vary between a state before a focusing operation is performed and a state after a focusing operation is performed. As a result, as the angle of view increases, an image plane shift may increase in the case where the object distance varies. Thus, the above phenomenon is a factor of lowering the performance in proximity focusing.

In the above sense, the configuration of the fourth lens element of the imaging lenses disclosed in patent literature 1 and in patent literature 2 may have room for further improvement. As the incident position of off-axis light flux with respect to a lens element varies during a focusing operation, the spot position of off-axis light flux may shift in the optical axis direction. As a result, in the imaging lenses disclosed in patent literature 1 and in patent literature 2, the performance on off-axis angle of view may be lowered, as a focusing operation is carried out.

## CITATION LIST

### PATENT LITERATURE

Patent literature 1: JP 2010-224521A
Patent literature 2: WO 2011/004467A

## SUMMARY OF INVENTION

In view of the above, an object of the invention is to provide an imaging optical system provided with five lens elements, which enables to correct various aberrations in a satisfactory manner even at a wide angle of view, while achieving miniaturization. Another object of the invention is to provide an imaging device incorporated with the imaging optical system, and a digital apparatus loaded with the imaging device.

An imaging optical system, an imaging device, and a digital apparatus according to the invention are provided with, in this order from the object side, a first positive lens element convex toward the object side, a second negative lens element concave toward the image side, a third lens element having both surfaces with a region, in which the lens section is located on the object side than the intersection with the optical axis AX, a fourth positive lens element convex toward the image side with at least one surface having an aspherical shape with inflection points, and a fifth negative lens element concave toward the image side. Assuming that f1, f1, and f4 are focal lengths of the entire system, the first lens element, and the fourth lens element, and R1_L3, R2_L3 are paraxial diameters of the object-side surface and the image-side surface of the third lens element, the respective values of f1/f, f4/f, f/R1_L3 and f/R2_L3 satisfy predetermined conditions. The thus configured imaging optical system, imaging device, and digital apparatus are provided with five lens elements, and are capable of correcting various aberrations in a satisfactory manner even at a wide angle of view, while achieving miniaturization.

These and other objects, features and advantages of the present invention will become more apparent upon reading the following detailed description along with the accompanying drawings.

## BRIEF DESCRIPTION OF DRAWINGS

FIG. 1 is a lens sectional view schematically showing a configuration of an imaging optical system embodying the invention for describing the configuration;
FIG. 2 is a schematic diagram showing the definition of an incident angle of a principal ray on an image plane;
FIG. 3 is a block diagram showing a configuration of a digital apparatus embodying the invention;
FIG. 4 is an external configuration diagram of a camera-mounted mobile phone as an example of the digital apparatus;
FIG. 5 is a cross-sectional view showing a configuration of lens elements in an imaging optical system as Example 1;
FIG. 6 is a cross-sectional view showing a configuration of lens elements in an imaging optical system as Example 2;
FIG. 7 is a cross-sectional view showing a configuration of lens elements in an imaging optical system as Example 3;
FIG. 8 is a cross-sectional view showing a configuration of lens elements in an imaging optical system as Example 4;
FIG. 9 is a cross-sectional view showing a configuration of lens elements in an imaging optical system as Example 5;
FIGS. 10A, 10B, and 10C are longitudinal aberration diagrams of the imaging optical system as Example 1 at an infinite distance;
FIGS. 11A, 11B, 11C, 11D, and 11E are transverse aberration diagrams of the imaging optical system as Example 1 at an infinite distance;
FIGS. 12A, 12B, and 12C are longitudinal aberration diagrams of the imaging optical system as Example 1 at 10 cm distance;
FIGS. 13A, 13B, 13C, 13D, and 13E are transverse aberration diagrams of the imaging optical system as Example 1 at 10 cm distance;

FIGS. 14A, 14B, and 14C are longitudinal aberration diagrams of the imaging optical system as Example 2 at an infinite distance;

FIGS. 15A, 15B, 15C, 15D, and 15E are transverse aberration diagrams of the imaging optical system as Example 2 at an infinite distance;

FIGS. 16A, 16B, and 16C are longitudinal aberration diagrams of the imaging optical system as Example 2 at 10 cm distance;

FIGS. 17A, 17B, 17C, 17D, and 17E are transverse aberration diagrams of the imaging optical system as Example 2 at 10 cm distance;

FIGS. 18A, 18B, and 18C are longitudinal aberration diagrams of the imaging optical system as Example 3 at an infinite distance;

FIGS. 19A, 19B, 19C, 19D, and 19E are transverse aberration diagrams of the imaging optical system as Example 3 at an infinite distance;

FIGS. 20A, 20B, and 20C are longitudinal aberration diagrams of the imaging optical system as Example 3 at 10 cm distance;

FIGS. 21A, 21B, 21C, 21D, and 21E are transverse aberration diagrams of the imaging optical system as Example 3 at 10 cm distance;

FIGS. 22A, 22B, and 22C are longitudinal aberration diagrams of the imaging optical system as Example 4 at an infinite distance;

FIGS. 23A, 23B, 23C, 23D, and 23E are transverse aberration diagrams of the imaging optical system as Example 4 at an infinite distance;

FIGS. 24A, 24B, and 24C are longitudinal aberration diagrams of the imaging optical system as Example 4 at 10 cm distance;

FIGS. 25A, 25B, 25C, 25D, and 25E are transverse aberration diagrams of the imaging optical system as Example 4 at 10 cm distance;

FIGS. 26A, 26B, and 26C are longitudinal aberration diagrams of the imaging optical system as Example 5 at an infinite distance;

FIGS. 27A, 27B, 27C, 27D, and 27E are transverse aberration diagrams of the imaging optical system as Example 5 at an infinite distance;

FIGS. 28A, 28B, and 28C are longitudinal aberration diagrams of the imaging optical system as Example 5 at 10 cm distance; and

FIGS. 29A, 29B, 29C, 29D, and 29E are transverse aberration diagrams of the imaging optical system as Example 5 at 10 cm distance.

## DESCRIPTION OF EMBODIMENTS

In order to solve the above technical drawbacks, in this embodiment, there are provided an imaging optical system, an imaging device, and a digital apparatus having the following configuration. The terms used in the following description are defined as follows in this specification.

(a) A refractive index is the one for a wavelength (587.56 nm)of d-line light.
(b) An Abbe number is an Abbe number vd obtained by the following definitional equation:

$$\nu d = (nd-1)/(nF-nC)$$

where

nd: a refractive index for d-line light,
nF: a refractive index for F-line light (wavelength: 486.13 nm),
nC: a refractive index for C-line light (wavelength: 656.28 nm), and
vd: an Abbe number.

(c) Expressions such as "concave", "convex" and "meniscus" used to describe lens elements indicate the lens shapes near an optical axis (near the center of a lens element).
(d) A refractive power (an optical power, an inverse of a focal length) of each of the lens elements composing a cemented lens is a power in the case where there is air at the opposite sides of lens surfaces of each lens element.

(e) Since a resin material used for a hybrid aspherical lens has only an additional function of a glass material for a substrate, the hybrid aspherical lens is not handled as a single optical member, but handled similar to the case where the substrate composed of the glass material has an aspherical surface, and is considered to be one lens element. A lens refractive index is also considered to be a refractive index of a glass material forming a substrate. A hybrid aspherical lens is a lens having an aspherical surface by applying a thin layer of a resin material on a glass material forming a substrate.

Hereinafter, an embodiment of the invention is described referring to the drawings. Constructions identified by the same reference numerals in the drawings are the same constructions and are not repeatedly described unless necessary. The number of lenses in a cemented lens is represented by the number of lens elements composing the cemented lens.

<Description on Imaging Optical System as Embodiment>

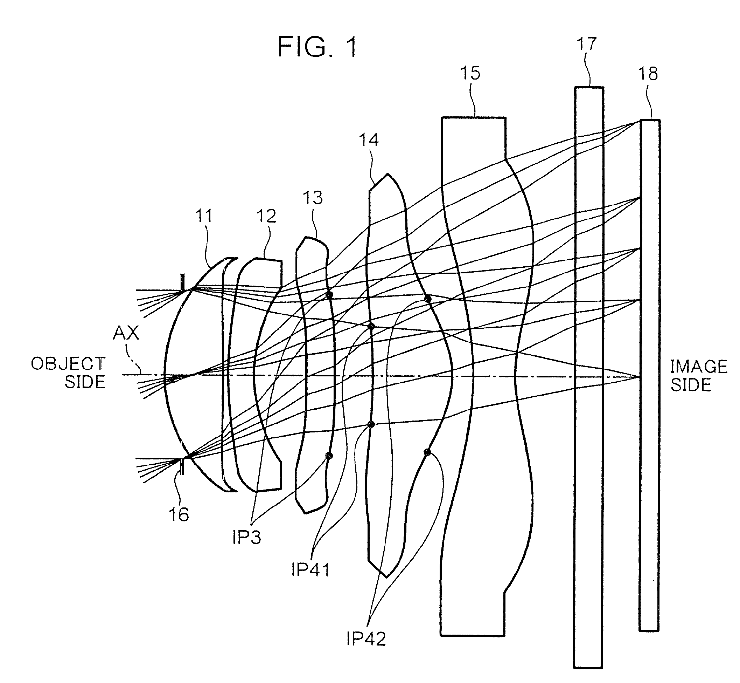

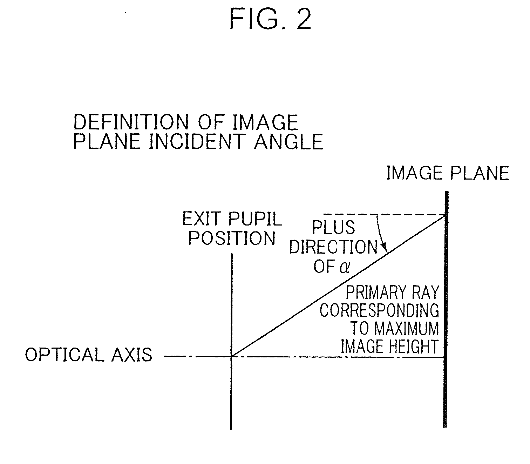

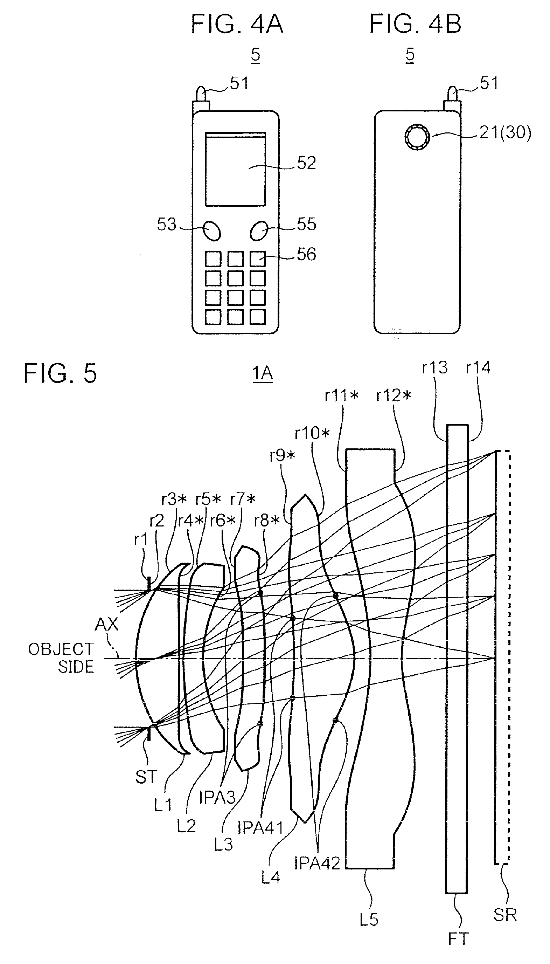

FIG. 1 is a lens sectional view schematically showing a configuration of an imaging optical system embodying the invention for describing the imaging optical system. FIG. 2 is a schematic diagram showing the definition of image plane incident angle of principal ray.
Referring to FIG. 1, the imaging optical system 1 is configured to form an optical image of an object (subject) on a light receiving surface of an imaging element 18 for converting the optical image into an electrical signal, and is an optical system constituted of five lens elements i.e. a first lens element 11, a second lens element 12, a third lens element 13, a fourth lens element 14, and a fifth lens element 15 in the order from the object side toward the image side. The imaging element 18 is disposed at such a position that the light receiving surface thereof substantially coincides with the image plane of the imaging optical system 1. In other  words, the image plane of the imaging optical system 1 corresponds to the imaging surface of the imaging element 18. The imaging optical system 1 exemplarily illustrated in FIG. 1 has the same construction as an imaging optical system 1A (see FIG. 5) as Example 1 to be described later.
In the imaging optical system 1, all the first to fifth lens elements 11 to 15 are integrally movable in the optical axis direction for focusing.
Further, the first lens element 11 has a positive refractive power, and is convex toward the object side. The second lens element 12 has a negative refractive power, and is concave toward the image side. The third lens element 13 has a predetermined refractive power. The fourth lens element 14 has a positive refractive power, and is convex toward the image side. The fifth lens element 15 has a negative refractive power, and is concave toward the image side. Specifically, in the example shown in FIG. 1, the first lens element 11 is a biconvex positive lens element, the second lens element 12 is a negative meniscus lens element concave toward the image side, the third lens element 13 is a positive meniscus lens element convex toward the image side, the fourth lens element 14 is a positive meniscus lens element convex toward the image side, and the fifth lens element 15 is a biconcave negative lens element. Each of the first to fifth lens elements 11 to 15 is configured such that both surfaces thereof are aspherical. Further, the image-side surface of the third lens element 13 has inflection points IP3 and IP3 on the profile of a cross section of the third lens element 13 along the optical axis AX (cross section of the third lens element 13 along the optical axis AX and including the optical axis AX) in a direction from the intersection with the optical axis AX toward an end of the effective area of the third lens element 13. The third lens element 13 has a region, in a peripheral area thereof radially away from the optical axis AX by a predetermined distance, having a negative refractive power on the cross section of the third lens element 13 including the optical axis AX. Further, the third lens element 13 has a region, on both of the object-side surface and the image-side surface thereof, in which the cross section of the third lens element 13 is located on the object side than the intersection with the optical axis AX, on the cross section including the optical axis AX. The third lens element 13 satisfies the following conditional expressions (A1) and (A2).

$$-0.4 < f/R1\_L3 < 0.2 \qquad \dots (A1)$$

$$-0.6 < f/R2\_L3 < 0.05 \qquad \dots (A2)$$

where f denotes a focal length of the entirety of the imaging optical system 1, R1_L3 denotes a paraxial diameter of the object-side surface of the third lens element 13, and R2_L3 denotes a paraxial diameter of the image-side surface of the third lens element 13. The fourth lens element 14 has inflection points IP41 and IP41 on the object-side surface thereof, and has inflection points IP42 and IP42 on the image-side surface thereof, on the profile of a cross section of the fourth lens element 14 along the center axis (optical axis AX) in a direction from the intersection with the optical axis AX toward an end of the effective area of the fourth lens element 14.

The first to fifth lens elements 11 to 15 may be glass molded lens elements, or may be lens elements made of a resin material such as plastic. In particular, in the case where the imaging optical system is loaded in a mobile terminal device, it is preferable to use a resin lens element in view of reducing the weight and the cost of the device. In the example shown in FIG. 1, the first to fifth lens elements 11 to 15 are resin lens elements.

The imaging optical system 1 further satisfies the following conditional expressions (1) and (2).

$$0.5 < |f1/f| < 0.67 \qquad \dots (1)$$

$$0.3 < |f4/f| < 0.63 \qquad \dots (2)$$

where f1 denotes a focal length of the first lens element 11, f4 denotes a focal length of the fourth lens element 14, and f denotes a focal length of the entirety of the imaging optical system 1.

As shown in FIG. 2, the image plane incident angle of principal ray is the angle $\alpha$ (unit: degree) of principal ray incident at a maximum angle of view among the incident light rays onto an imaging surface with respect to normal to the image plane, and the image plane incident angle $\alpha$ is defined based on the premise that the principal ray angle is in the plus direction in the case where the exit pupil position is located on the object side than the image plane.

In the imaging optical system 1, an optical diaphragm 16 such as an aperture stop is disposed on the object side of the first lens element 11.

Further, a filter 17 and the imaging element 18 are disposed on the image side of the imaging optical system 1, in other words, on the image side of the fifth lens element 15. The filter 17 is an optical element in the form of a parallel plate, and is a schematic example of various optical filters, or a cover glass for the imaging element. It is possible to dispose various optical filters such as a low-pass filter or an infrared cut filter, as necessary, depending on the purpose of use or the configuration of an imaging element or a camera. The imaging element 18 is an element configured to photoelectrically convert an optical image of an object formed by the imaging optical system 1 into image signals of respective color components of R (red), G (green) and B (blue) in accordance with the light amount of the optical image, and to output the image signals to a specified image processing circuit (not shown). Thus, the optical image of the object on the object side is guided to the light receiving surface of the imaging element 18 at a suitable magnification ratio along the optical axis AX by the imaging optical system 1, whereby the optical image of the object is imaged by the imaging element 18.

The thus configured imaging optical system 1 is constituted of five lens elements i.e. the first to fifth lens elements 11 to 15. Providing the first to fifth lens elements 11 to 15 with the aforementioned optical characteristics, and disposing the first to fifth lens elements 11 to 15 in the order from the object side to the image side as described above makes it possible to correct various aberrations in a satisfactory manner even at a wide angle of view, while achieving miniaturization.

More specifically, the imaging optical system 1 is a telephoto optical system configured such that a positive lens group constituted of the first lens element 11, the second lens element 12, the third lens element 13, and the fourth lens element 14; and the negative fifth lens element 15 are disposed in the order from the object side. The above configuration is advantageous in shortening the total length of the imaging optical system 1.

Further, in the imaging optical system 1, two or more lens elements (in the example shown in FIG. 1, the second lens element 12 and the fifth lens element 15) among the five lens elements are negative lens elements. Accordingly, the number of lens surfaces capable of emanating light is large. Thus, the imaging optical system 1 makes it possible to correct the Petzval sum with ease, and to secure satisfactory imaging performance up to a peripheral portion of a screen.

Further, in the imaging optical system 1, both of the object-side surface and the image-side surface of the third lens element 13 are configured to have a region, in which the cross section of the third lens element 13 is located on the object side than the intersection with the optical axis AX, on the cross section including the optical axis AX. This makes it possible to configure the imaging optical system 1 such that the concave surface of the second lens element 12 and the concave surface of the third lens element 13 face each other to provide substantially the same effect as in the case where the third lens element 13 is a meniscus lens element. Accordingly, the imaging optical system 1 is advantageous in correcting coma aberration generated in a light flux emanating from the image-side surface of the second lens element 12 at a large angle during a focusing operation for an infinite distance object and during a focusing operation for a near distance object by the object-side surface of the third lens element 13. Thus, it is possible to correct the coma aberration in a satisfactory manner even at a wide angle of view.

Exceeding the upper limit of the conditional expression (A1) is not preferable in the aspect of securing a region, in which the cross section of the lens element is located on the object side than the intersection with the optical axis AX, on the cross section of the lens element. This is because exceeding the upper limit of the conditional expression (A1) may increase a local change in curvature, and may increase the performance variation at a low image height position, as a focusing operation is carried out. On the other hand, falling below the lower limit of the conditional expression (A1) is not preferable, because falling below the lower limit of the conditional expression (A1) may excessively increase the refractive power of the third lens element 13 in a paraxial region, and may increase the performance variation at a low image height position, as a focusing operation is carried out.

Further, exceeding the upper limit of the conditional expression (A2) is not preferable in the aspect of securing a region, in which the cross section of the lens element is located on the object side than the intersection with the optical axis AX, on the cross section of the lens element. This is because exceeding the upper limit of the conditional expression (A2) may increase a local change in curvature, and may increase the performance variation at a low image height position, as a focusing operation is carried out. On the other hand, falling below the lower limit of the conditional expression (A2) is not preferable, because falling below the lower limit of the conditional expression (A2) may excessively increase the refractive power of the third lens element 13 in a paraxial region, and may increase the performance variation at a low image height position, as a focusing operation is carried out.

Preferably, the fitting curvature in a region corresponding to 50% of the effective area of the third lens element 13 may have a minus value. The fitting curvature at a position corresponding to 50% of the effective area means a diameter to be obtained by carrying out a fitting process of shape measurement values with use of a least square method, within a region corresponding to 50% or smaller of the maximum effective radius from the intersection between the lens surface and the optical axis AX. Providing the configuration that the fitting curvature lies within the region corresponding to 50% of the effective area of the third lens element 13 is advantageous in enhancing the aforementioned effect of coma aberration correction.

Further, the imaging optical system 1 is provided with the fourth lens element 14, which is a meniscus lens element having a positive refractive power and having a convex surface toward the image side. This makes it possible to guide an off-axis light ray emanating from the second lens element 12 at a large angle to the fifth lens element 15, while suppressing an increase in refractive angle at each of the lens surfaces. Thus, the above configuration is advantageous in suppressing off-axis aberration in a satisfactory manner.

Further, in the imaging optical system 1, both surfaces of the fourth lens element 14 have an aspherical shape with the inflection points as described above. Accordingly, the imaging optical system 1 is advantageous in correcting aberration generated in an off-axis light flux in a satisfactory manner. In the imaging optical system 1, even in the case where the incident position of off-axis light flux with respect to a lens element varies during a focusing operation, it is possible to suppress a shift in spot position of off-axis light flux in the optical axis direction.

The aforementioned conditional expression (1) is a conditional expression that appropriately sets the focal length f1 of the first lens element 11, and shortens the total length of the imaging optical system 1 while appropriately correcting aberration. Controlling the value of the conditional expression (1) so that the value does not exceed the upper limit of the conditional expression (1) makes it possible for the imaging optical system 1 to appropriately maintain the refractive power of the first lens element 11, and to dispose a combined principal point obtained from the first to fourth lens elements 11 to 14 at a position closer to the object side, while shortening the total length of the imaging optical system 1. On the other hand, controlling the value of the conditional expression (1) so that the value does not fall below the lower limit of the conditional expression (1) makes it possible for the imaging optical system 1 to suppress an increase in high-order spherical aberration or coma aberration generated in the first lens element 11, while suppressing an excessive increase of refractive power of the first lens element 11.

In view of the above points, the imaging optical system 1 of the embodiment may preferably satisfy the following conditional expression (1').

$$0.52 < |f1/f| < 0.67 \qquad \ldots (1')$$

Further, the conditional expression (2) is a conditional expression that appropriately sets the focal length f4 of the fourth lens element 14, and appropriately corrects aberration generated in off-axis light flux. Controlling the value of the conditional expression (2) so that the value does not exceed the upper limit of the conditional expression (2) makes it possible for the imaging optical system 1 to suppress an increase in refractive angle of off-axis light ray with respect to the fifth lens element 15, and to suppress off-axis aberration in a satisfactory manner. On the other hand, controlling the value of the conditional expression (2) so that the value does not fall below the lower limit of the conditional expression (2) makes it possible for the imaging optical system 1 to appropriately control a local change in refractive power of the fourth lens element 14, resulting from a change in incident position of off-axis light flux with respect to the fourth lens element 14 between a state before a focusing operation is performed and a state after a focusing operation is performed. This is advantageous in correcting a shift in spot position of off-axis light ray in the optical axis direction during a focusing operation for an infinite distance object and for a near distance object.

In the imaging optical system 1, the image-side surface of the fifth lens element 15 disposed at a position closest to the image side among the five lens elements has an aspherical shape. Accordingly, the imaging optical system 1 is advantageous in correcting various aberrations in a peripheral portion of a screen in a satisfactory manner, and is also advantageous in securing telecentricity of image-side light flux.

Further, in the imaging optical system 1, the image-side surface of the third lens element 13 has an aspherical shape, and has the inflection points IP3 and IP3 on the profile of a cross section of the lens element along the optical axis AX in a direction from the intersection with the optical axis AX toward an end of the effective area of the third lens element 13. Thus, the imaging optical system 1 of the embodiment is provided with the inflection points IP3 and IP3 on the image-side surface of the third lens element 13, in addition to the inflection points IP41 and IP41; and IP42 and IP42 of the fourth lens element 14. Accordingly, the imaging optical system 1 is advantageous in appropriately correcting a shift of off-axis light flux in the optical axis direction, even in the case where the incident position of off-axis light flux with respect to the lens element changes, as a focusing operation is carried out.

Further, in the imaging optical system 1, the image-side surface of the fourth lens element 14 has the inflection points IP42 and IP42, on the profile of a cross section of the fourth lens element 14 along the optical axis AX in a direction from the intersection with the optical axis AX toward an end of the effective area of the fourth lens element 14. Accordingly, providing the inflection points IP42 and IP42 at a position closer to the image side in the imaging optical system 1 makes it possible to appropriately set the refractive power with respect to off-axis light flux. This is more advantageous in correcting field curvature of off-axis light flux in a satisfactory manner.

Further, in the imaging optical system 1, the object-side surface of the fourth lens element 14 has the inflection points IP41 and IP41, in addition to the inflection points IP42 and IP42 on the image-side surface of the fourth lens element 14. Specifically, in the imaging optical system 1, both surfaces i.e. the object-side surface and the image-side surface of the fourth lens element 14 have the inflection points IP41 and IP41; and IP42 and IP42, on the profile of a cross section of the fourth lens element 14 along the optical axis AX in a direction from the intersection with the optical axis AX toward an end of the effective area of the fourth lens element 14. Accordingly, in the imaging optical system 1 of the embodiment, disposing the inflection points IP41 and IP41; and IP42 and IP42 on the respective surfaces of the fourth lens element 14 makes it possible to correct a change in field curvature resulting from a change in incident position of off-axis light flux with respect to the fourth lens element 14 during a focusing operation by the object-side surface and the image-side surface of the fourth lens element 14. This is more advantageous in suppressing a change in spot position of off-axis light flux.

Further, the imaging optical system 1 is provided with the optical diaphragm 16 such as an aperture stop on the object side of the first lens element 11. Accordingly, disposing the optical diaphragm 16 on the object side of the first lens element 11 in the imaging optical system 1 of the embodiment makes it possible to set an incident angle of off-axis light flux with respect to the fifth lens element 15 small. This is advantageous in securing telecentricity in a satisfactory manner, while suppressing a change in spot position of off-axis light flux during a focusing operation.

Further, in the imaging optical system 1, the image-side surface of the third lens element 13 has a region, in a peripheral area thereof radially away from the optical axis AX by a predetermined distance, having a negative refractive power on the cross section including the optical axis AX. Accordingly, providing a region having a negative refractive index in a peripheral portion of the third lens element 13 in the imaging optical system 1 of the embodiment makes it possible to correct coma aberration and magnification chromatic aberration generated in an off-axis light flux in a satisfactory manner, without the need of emanating the off-axis light flux from the second lens element 12 at an excessively large angle.

Further, in the imaging optical system 1, all the first to fifth lens elements 11 to 15 are resin lens elements made of a resin material.

In recent years, there has been developed a solid-state imaging device having a small pixel pitch and accordingly having a small imaging surface, with use of a solid-state imaging element having the same pixel number as a conventional imaging element, for the purpose of miniaturization of the solid-state imaging device as a whole. In an imaging optical system for use in such a solid-state imaging element having a small imaging surface, it is necessary to relatively shorten the focal length of the entire optical system. This results in a considerable reduction of the curvature radius or the outer diameter of each lens element. In the imaging optical system 1, all the lens elements are constituted of plastic lens elements manufactured by injection molding. Accordingly, it is possible to mass-produce the imaging optical system 1 at a low cost, regardless of use of the lens elements having a small curvature radius or outer diameter, as compared with an optical system incorporated with glass lens elements to be manufactured by a polishing process, which is cumbersome. Further, a plastic lens element is advantageous in a point that the pressing temperature can be lowered. Accordingly, it is possible to suppress wear of a molding die. As a result, the number of times of replacing the molding die or the number of times of maintenance can be reduced, which is advantageous in suppressing the cost. Thus, the imaging optical system 1 of the embodiment is advantageous in implementing a predetermined performance relatively easily, while suppressing the cost.

The thus configured imaging optical system 1 may preferably satisfy the following conditional expression (3).

$$1<(R1\_L4+R2\_L4)/(R1\_L4-R2\_L4)<2 \qquad \dots (3)$$

where R1_LA denotes an on-axis curvature radius of the object-side surface of the fourth lens element 14, and R2_L4 denotes an on-axis curvature radius of the image-side surface of the fourth lens element 14.

The conditional expression (3) defines the shape of the fourth lens element 14 for appropriately correcting a shift in spot position of off-axis light ray in the optical axis direction during a focusing operation for an infinite distance object and a focusing operation for a near distance object. Controlling the value of the conditional expression (3) so that the value does not exceed the upper limit of the conditional expression (3) makes it possible for the imaging optical system 1 to appropriately control a local change in refractive power resulting from a change in incident position of off-axis light flux with respect to the fourth lens element 14 between a state before a focusing operation is performed and a state after a focusing operation is performed, and to secure satisfactory off-axis performance regardless of the object distance. On the other hand, controlling the value of the conditional expression (3) so that the value does not fall below the lower limit of the conditional expression (3) makes it possible for the imaging optical system 1 to guide an off-axis light ray emanating from the second lens element 12 at a large angle to the fifth lens element 15, while making the refractive angle at each of the lens elements small. This is more advantageous in suppressing off-axis aberration in a satisfactory manner.

In view of the above points, the imaging optical system 1 may more preferably satisfy the following conditional expression (3').

$$1.1<(R1\_L4+R2\_L4)/(R1\_L4-R2\_L4)<1.6 \qquad \dots (3')$$

Further, the thus configured imaging optical system 1 may preferably satisfy the following conditional expression (4).

$$0<|f4/f3|<0.12 \qquad \dots (4)$$

where f3 denotes a focal length of the third lens element 13, and f4 denotes a focal length of the fourth lens element 14.

The conditional expression (4) is a conditional expression that appropriately sets the focal lengths of the third lens element 13 and of the fourth lens element 14, and to secure satisfactory aberration correction. Controlling the value of the conditional expression (4) so that the value does not exceed the upper limit of the conditional expression (4) makes it possible for the imaging optical system 1 to appropriately set the inflection point positions of the third lens element 13 and of the fourth lens element 14, and to suppress field curvature of off-axis light flux regardless of the object distance.

In view of the above points, the imaging optical system 1 may more preferably satisfy the following conditional expression (4').

$$0<|f4/f3|<0.1 \qquad \dots (4')$$

Further, the thus configured imaging optical system 1 may preferably satisfy the following conditional expression (5).

$$15<v2<31 \qquad \dots (5)$$

where v2 denotes an Abbe number of the second lens element 12.

The conditional expression (5) is a conditional expression that appropriately sets the Abbe number of the second lens element 12. Controlling the value of the conditional expression (5) so that the value does not exceed the upper limit of the conditional expression (5) makes it possible for the imaging optical system 1 to make the degree of decentration of the second lens element 12 to an appropriately large value, and to correct chromatic aberration such as on-axis chromatic aberration or magnification chromatic aberration, while suppressing an excessive increase in refractive power of the second lens element 12. On the other hand, controlling the value of the conditional expression (5) so that the value does not fall below the lower limit of the conditional expression (5) makes it possible to manufacture the imaging optical system 1 of an easily available material.

In view of the above points, the imaging optical system 1 may more preferably satisfy the following conditional expression (5').

$$15 < \nu2 < 27 \qquad \dots (5')$$

Further, the thus configured imaging optical system 1 may preferably satisfy the following conditional expression (6).

$$1.6 < Nd2 < 2.1 \qquad \dots (6)$$

where Nd2 denotes a refractive power of the second lens element 12 with respect to d-line light.

The conditional expression (6) is a conditional expression that corrects chromatic aberration and field curvature of the entirety of the imaging optical system 1 in a satisfactory manner. Controlling the value of the conditional expression (6) so that the value does not fall below the lower limit of the conditional expression (6) makes it possible for the imaging optical system 1 to appropriately maintain the refractive power of the second lens element 2 having a relatively large degree of decentration, and to correct chromatic aberration and field curvature in a satisfactory manner. On the other hand, controlling the value of the conditional expression (6) so that the value does not exceed the upper limit of the conditional expression (6) makes it possible to manufacture the imaging optical system 1 of an easily available material.

In view of the above points, the imaging optical system 1 may more preferably satisfy the following conditional expression (6').

$$1.6 < Nd2 < 2 \qquad \dots (6')$$

Further, the thus configured imaging optical system 1 may preferably satisfy the following conditional expression (7).

$$15 < \nu3 < 31 \qquad \dots (7)$$

where v3 denotes an Abbe number of the third lens element 13.

The conditional expression (7) is a conditional expression that appropriately sets the Abbe number of the third lens element 13. Controlling the value of the conditional expression (7) so that the value does not exceed the upper limit of the conditional expression (7) makes it possible for the imaging optical system 1 to make the degree of decentration of the third lens element 13 to an appropriately large value, and to correct chromatic aberration such as chromatic aberration or magnification chromatic aberration generated in an off-axis light flux in a satisfactory manner, while suppressing an excessive increase in refractive power of the third lens element 13. Further, controlling the value of the conditional expression (7) so that the value does not exceed the upper limit of the conditional expression (7) makes it possible for the imaging optical system 1 to appropriately correct on-axis chromatic aberration. On the other hand, controlling the value of the conditional expression (7) so that the value does not fall below the lower limit of the conditional expression (7) makes it possible to manufacture the imaging optical system 1 of an easily available material.

In view of the above points, the imaging optical system 1 may more preferably satisfy the following conditional expression (7').

$$15 < \nu3 < 27 \qquad \dots (7')$$

Further, the thus configured imaging optical system 1 may preferably satisfy the following conditional expression (8).

$$1.6 < Nd3 < 2.1 \qquad \dots (8)$$

where Nd3 denotes a refractive power of the third lens element 13 with respect to d-line light.

The conditional expression (8) is a conditional expression that corrects the performance of spot position of off-axis light flux in a satisfactory manner regardless of the object distance. Controlling the value of the conditional expression (8) so that the value does not fall below the lower limit of the conditional expression (8) makes it possible for the imaging optical system 1 to appropriately control a local change in refractive power of off-axis light flux at an incident position, resulting from a change in incident position of off-axis light flux with respect to the third lens element 13 during a focusing operation. On the other hand, controlling the value of the conditional expression (8) so that the value does not exceed the upper limit of the conditional expression (8) makes it possible to manufacture the imaging optical system 1 of an easily available material.

In view of the above points, the imaging optical system 1 may more preferably satisfy the following conditional expression (8').

$$1.6 < Nd3 < 2 \qquad\qquad \ldots (8')$$

Further, in the thus configured imaging optical system 1, a cam or a stepping motor may be used, or a piezoelectric actuator may be used for driving the movable first to fifth lens elements 11 to 15, for instance. In the case where a piezoelectric actuator is used, it is possible to drive the lens elements independently of each other, while suppressing an increase in volume and electric power consumption of a driving device. This is more advantageous in miniaturizing the imaging device.

Further, as described above, a resin lens element is used in the imaging optical system 1. Alternatively, in the imaging optical system 1, a glass lens element having an aspherical surface may be used. In the modification, the aspherical glass lens element may be a glass molded aspherical lens element, a ground aspherical glass lens element, or a hybrid aspherical lens element (a lens element obtained by forming an aspherical resin layer on a spherical glass lens element). The glass molded aspherical lens element is preferable for mass production. The hybrid aspherical lens element has a high degree of freedom in design, because many kinds of glass materials capable of molding into a substrate are available. In particular, it is preferable to use a hybrid aspherical lens element, in view of a point that it is not easy to mold a material having a high refractive index into an aspherical lens element. Further, forming one surface of a lens element into an aspherical surface is advantageous in maximally utilizing the advantages of the hybrid aspherical lens element.

Further, in the case where a plastic lens element is used in the thus configured imaging optical system 1, it is preferable to use a lens element molded by using a material, in which particles of 30 nm or smaller as a maximum diameter are dispersed in plastic (resin material).

Generally, if fine particles are mixed with a transparent resin material, light is scattered, which lowers the transmittance. Thus, it has been difficult to use such a material as an optical material. However, by setting the size of the fine particles to a value smaller than the wavelength of a transmitted light flux, light is not substantially scattered. As temperature rises, the refractive index of the resin material is lowered. Conversely, as temperature rises, the refractive index of inorganic particles is raised. Accordingly, it is possible to generally keep the refractive index unchanged with respect to a temperature change by cancelling out the refractive indexes, taking advantage of such temperature dependencies. More specifically, it is possible to obtain a resin material having a refractive index with less temperature dependence by dispersing inorganic particles having a maximum diameter of 30 nm or smaller in the resin material as a base material. For example, fine particles of niobium oxide ($Nb_2O_5$) are dispersed in acrylic resin. In the thus configured imaging optical system 1, variation of the image point position at the time of temperature change in the entirety of the imaging optical system 1 can be suppressed by using a plastic material containing inorganic fine particle dispersants for a lens element having a relatively large refractive power or for all the lens elements (in the example shown in FIG. 1, the first to fifth lens elements 11 to 15).

It is preferable to mold such a plastic lens element containing inorganic fine particles as a dispersant as follows.

A refractive index change with temperature is described as follows. A refractive index change n(T) with temperature is expressed by the following formula (Fa) by differentiating a refractive index n by temperature T based on the Lorentz-Lorentz formula.

$$n(T)=((n^2+2)\times(n^2-1))/6n\times(-3\alpha+(1/[R])\times(\partial[R]/\partial T)) \qquad \ldots (Fa)$$

where $\alpha$ denotes a linear expansion coefficient and [R] denotes a molecular refraction.

In the case of a resin material, contribution of the refractive index to the temperature dependence is generally smaller in the second term than in the first term of the formula Fa, and can be substantially ignored. For instance, in the case of a PMMA resin, the linear expansion coefficient $\alpha$ is $7\times10^{-5}$, and, if the linear expansion coefficient $\alpha$ is substituted

into the formula (Fa), n(T)=-12×10⁻⁵ (/°C), which substantially coincides with an actual measurement value.

Specifically, the refractive index change n(T) with temperature, which has conventionally been about -12×10⁻⁵ (/°C), is preferably suppressed to below 8×10⁻⁵ (/°C) in absolute value, and more preferably suppressed to below 6×10⁻⁵ (/°C) in absolute value.

In view of the above, it is preferable to use a resin material containing polyolefin, a resin material containing polycarbonate, or a resin material containing polyester, as such a resin material. The refractive index change n(T) with temperature is about -11×10⁻⁵ (/°C) in the resin material containing polyolefin, about -14×10⁻⁵ (/°C) in the resin material containing polycarbonate, and about -13×10⁻⁵ (/°C) in the resin material containing polyester.

<Description on Digital Apparatus Incorporated with Imaging Optical System>

In this section, a digital apparatus incorporated with the aforementioned imaging optical system 1 is described.

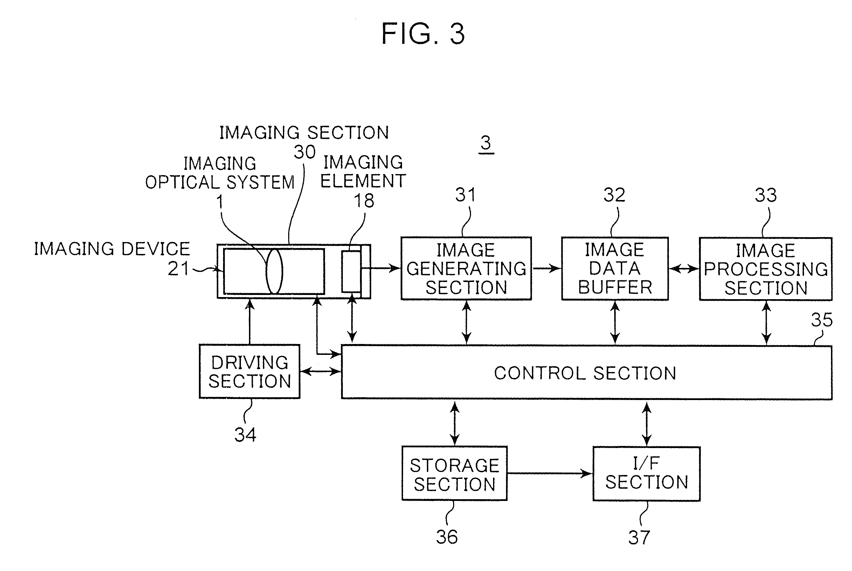

FIG. 3 is a block diagram showing a configuration of a digital apparatus embodying the invention. The digital apparatus 3 is provided with, as imaging functions, an imaging section 30, an image generating section 31, an image data buffer 32, an image processing section 33, a driving section 34, a control section 35, a storage section 36, and an I/F section 37. Examples of the digital apparatus 3 are a digital still camera, a video camera, a monitor camera, a mobile terminal device such as a mobile phone and a personal digital assistant (PDA), a personal computer, and a mobile computer. Peripheral devices (e.g. a mouse, a scanner, and a printer) of these devices may be included as examples of the digital apparatus 3. In particular, the imaging optical system 1 of the embodiment is sufficiently miniaturized to be loaded in a mobile terminal device such as a mobile phone or a personal digital assistant (PDA), and is suitably loaded in the mobile terminal device.

The imaging section 30 is constituted of an imaging device 21 and the imaging element 18. The imaging device 21 is provided with the imaging optical system 1 functioning as an imaging lens, as shown in FIG. 1, and an unillustrated lens driving device which drives the lens elements for focusing in the optical axis direction so as to perform a focusing operation. Light rays from an object are formed on the light receiving surface of the imaging element 18 by the imaging optical system 1, whereby an optical image of the object is obtained.

As described above, the imaging element 18 converts an optical image of an object formed by the imaging optical system 1 into electrical signals (image signals) of respective color components of R, G and B, and outputs these electrical signals to the image generating section 31 as image signals of the respective colors of R, G and B. The imaging element 18 is controlled by the control section 35 to perform an imaging operation e.g. at least one of a still image imaging operation and a moving image imaging operation, or a readout operation of output signals from the respective pixels in the imaging element 18 (including horizontal synchronization, vertical synchronization, transfer).

The image generating section 31 performs an amplification processing, a digital conversion processing and the like with respect to analog output signals from the imaging element 18, performs known image processings such as determination of a proper black level, gamma-correction, white balance adjustment (WB adjustment), outline correction and color unevenness correction for the entire image, and generates image data from the image signals. The image data generated by the image generating section 31 is outputted to the image data buffer 32.

The image data buffer 32 is a memory which temporarily stores image data, and is used as a work area in which the image processing section 33 performs a processing to be described later with respect to the image data. An example of the image data buffer 32 is an RAM (Random Access Memory), which is a volatile storage element.

The image processing section 33 is a circuit for performing a predetermined image processing such as resolution conversion with respect to image data from the image data buffer 32.

Further, the image processing section 33 may be so configured as to correct aberrations, which could not be corrected by the imaging optical system 1, by performing a known distortion correction processing for correcting a distortion in an optical image of an object formed on the light receiving surface of the imaging element 18, as necessary. A distortion correction is correcting an image distorted by aberrations into a natural image substantially free from distortion and having a similar shape as a scene seen by the naked eye. In such a configuration, even if an optical image of an object introduced to the imaging element 18 by the imaging optical system 1 is distorted, it is possible to generate a natural image substantially free from distortion. Further, in a configuration for correcting a distortion by an image processing by means of information processing, only the aberrations other than the distortion have to be considered, wherefore a degree of freedom in the design of the imaging optical system 1 is increased, and an easier design becomes possible. Further, in a configuration for correcting such a distortion by an image processing by means of information processing, in particular, aberration of a lens element closer to the image plane is reduced. This makes it easy to control the exit pupil position, and to form a lens element into an intended shape.

Further, the image processing section 33 may also perform a known peripheral illuminance reduction correction processing for correcting a reduction in peripheral illuminance in an optical image of an object formed on the light receiving surface of the imaging element 18. The peripheral illuminance reduction correction (shading correction) is performed by storing correction data for the peripheral illuminance reduction correction beforehand, and multiplying a photographed image (pixels) with the correction data. Since the reduction in peripheral illuminance mainly occurs due to incident angle dependence of sensitivity of the imaging element 18, lens vignetting, cosine fourth law and the like, the correction data is set at such a specified value as to correct an illuminance reduction caused by these factors. By employing such a configuration, it is possible to generate an image having a sufficient illuminance up to the periphery, even if peripheral illuminance is reduced in an optical image of an object introduced to the imaging element 18 by the imaging optical system 1.

The driving section 34 drives the lens elements for focusing in the imaging optical system 1 so as to perform focusing as required by causing the unillustrated lens driving device to actuate based on a control signal to be outputted from the control section 35.

The control section 35 is provided with a microprocessor and peripheral circuits thereof, and controls the operations of the respective parts i.e. the imaging section 30, the image generating section 31, the image data buffer 32, the image processing section 33, the driving section 34, the storage section 36, and the I/F section 37 in accordance with the respective functions thereof. In other words, the control section 35 controls the imaging device 21 to execute at least one of a still image photographing and a moving image photographing of an object.

The storage section 36 is a storage circuit for storing image data generated by a still image photographing or a moving image photographing of an object. For instance, the storage section 36 is constituted of an ROM (Read Only Memory), which is a non-volatile storage element, an EEPROM (Electrically Erasable Programmable Read Only memory), which is a rewritable non-volatile storage element, and an RAM. In other words, the storage section 36 has a function as a still image memory and a moving image memory.

The I/F section 37 is an interface through which image data is transmitted and received to and from an external device. Examples of the I/F section 37 are interfaces in accordance with the standards such as USB or IEEE1394.

In the following, an imaging operation to be performed by the digital apparatus 3 having the above configuration is described.

In the case where a still image is photographed, the control section 35 controls the imaging device 21 to perform the still image photographing, and controls the driving section 34 to actuate the unillustrated lens driving device of the imaging device 21 for moving all the lens elements, whereby focusing is performed. By the above control, a focused optical image is repeatedly and cyclically formed on the light receiving surface of the imaging element 18, and is converted into image signals of the respective color components of R, G and B. Thereafter, the image signals are outputted to the image generating section 31. The image signals are temporarily stored in the image data buffer 32, and are subjected to an image processing by the image processing section 33. Thereafter, an image based on the processed image signals is displayed on a display (not shown). Then, the photographer is allowed to adjust the position of the main object so that the main object is located at an intended position within a screen while viewing the display. When a shutter button (not shown) is depressed in this state, image data is stored in the storage element 36 as a still image memory. Thus, a still image is obtained.

Further, in the case where a moving image is photographed, the control section 35 controls the imaging device 21 to perform the moving image photographing. Then, the photographer is allowed to adjust the position of the image of the object obtained by the imaging device 21 so that the image of the object is located at an intended position within a screen while viewing the display (not shown) substantially in the same manner as the still image photographing. When the photographer depresses the shutter button (not shown) in this state, the moving image photographing is started. At the time of the moving image photographing, the control section 35 controls the imaging device 21 to perform the moving image photographing, and controls the driving section 34 to actuate the unillustrated lens driving device of the imaging device 21, whereby focusing is performed. By the above control, a focused optical image is repeatedly and cyclically formed on the light receiving surface of the imaging element 18, and is converted into image signals of the respective color components of R, G and B. Thereafter, the converted image signals are outputted to the image generating section 31. The image signals are temporarily stored in the image data buffer 32, and are subjected to an image processing by the image processing section 33. Thereafter, an image based on the processed image signals is displayed on the display (not shown). When the photographer depresses the shutter button (not shown) again, the moving image photographing is ended. The photographed moving image is stored in the storage element 36 as a moving image memory.

In the aforementioned configuration, it is possible to provide the imaging device 21 and the digital apparatus 3 incorporated with the imaging optical system 1 having five lens elements, in which various aberrations are corrected in a satisfactory manner even at a wide angle of view, while achieving miniaturization. In particular, miniaturization and enhanced performance are achieved in the imaging optical system 1. Accordingly, it is possible to employ a high-pixel imaging element 18, while achieving miniaturization. In particular, since the imaging optical system 1 is compact and is applicable to a high-pixel imaging element, the imaging optical system 1 is advantageously used in a mobile terminal device having a high pixel density and enhanced functions. The following is an example of a configuration, in which the imaging device 21 is loaded in a mobile phone.

FIGS. 4A and 4B are external configuration diagrams of a camera-mounted mobile phone, as an example of the digital apparatus 3. FIG. 4A shows an operation surface of the mobile phone, and FIG. 4B shows a back surface opposite to the operation surface, namely, a back surface of the mobile phone.

Referring to FIGS. 4A and 4B, a mobile phone 5 is provided with an antenna 51 at an upper portion thereof. As shown in FIG. 4A, there are mounted, on the operation surface of the mobile phone 5, a rectangular display 52, an image photographing button 53 for allowing the user to activate the image photographing mode and to switch the image photographing mode between the still image photographing and the moving image photographing, a shutter button 55, and a dial button 56.

Further, the mobile phone 5 is built in with a circuit for implementing a telephone function using a mobile telephone network. The mobile phone 5 is further built in with the imaging section 30, the image generating section 31, the image data buffer 32, the image processing section 33, the driving section 34, the control section 35, and the storage section 36. The imaging device 21 of the imaging section 30 is exposed to the outside through the back surface of the mobile phone 5.

In response to user's operation of the image photographing button 53, a control signal representing the operation contents instructed by the user is outputted to the control section 35. Then, the control section 35 executes operations in accordance with the operation contents, such as activation and execution of the still image photographing mode, or activation and execution of the moving image photographing mode. Then, in response to user's operation of the shutter button 55, a control signal representing the operation contents is outputted to the control section 35. Then, the control section 35 executes operations in accordance with the operation contents such as still image photographing or moving image photographing.

<Description on Practical Examples of Imaging Optical System>

In the following, practical constructions of the imaging optical system 1 as shown in FIG. 1, in other words, of the imaging optical system 1 incorporated in the imaging device 21 to be loaded in the digital apparatus 3 as shown in FIG. 3 are described with reference to the drawings.

[Example 1]

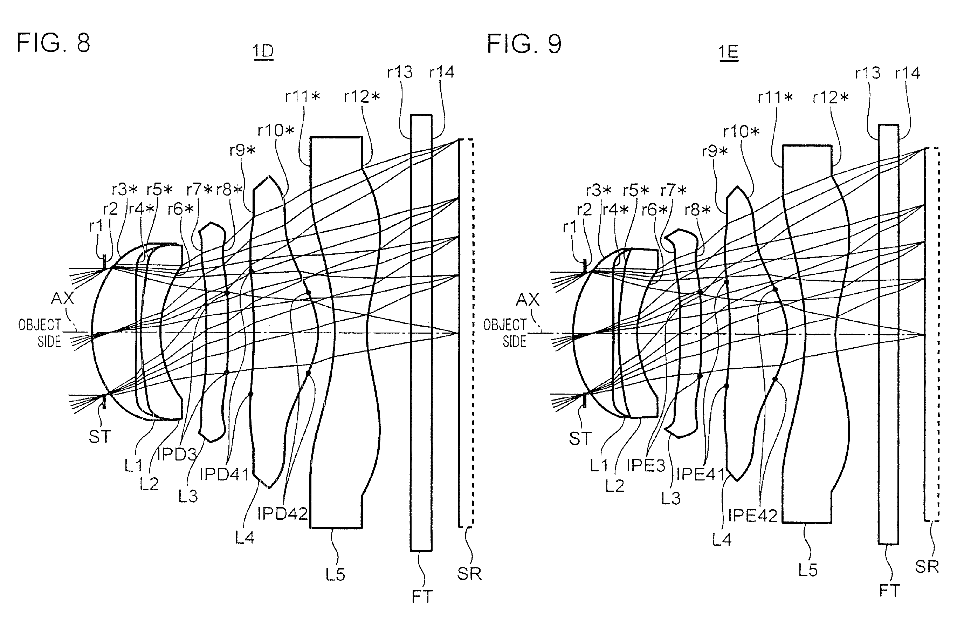

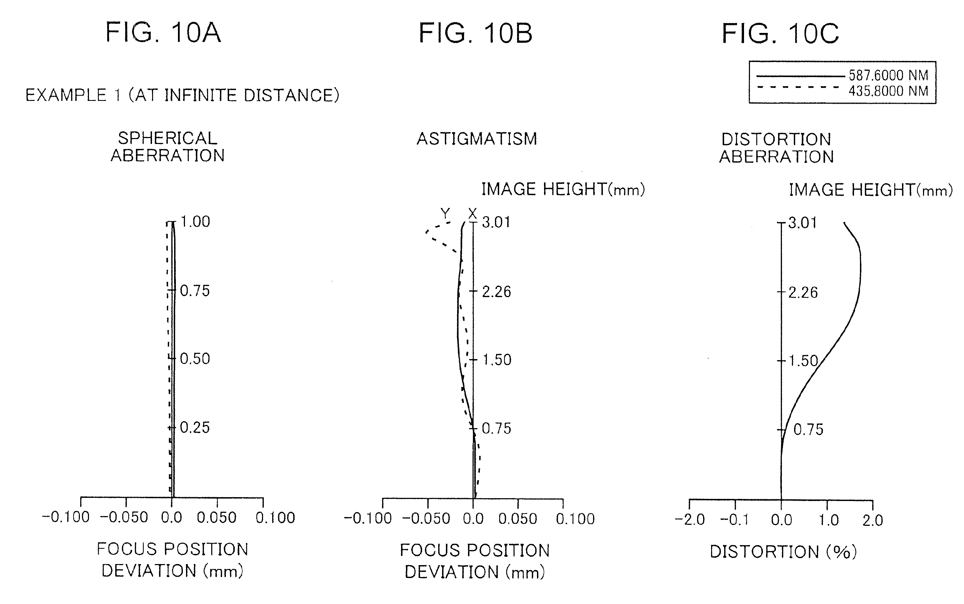

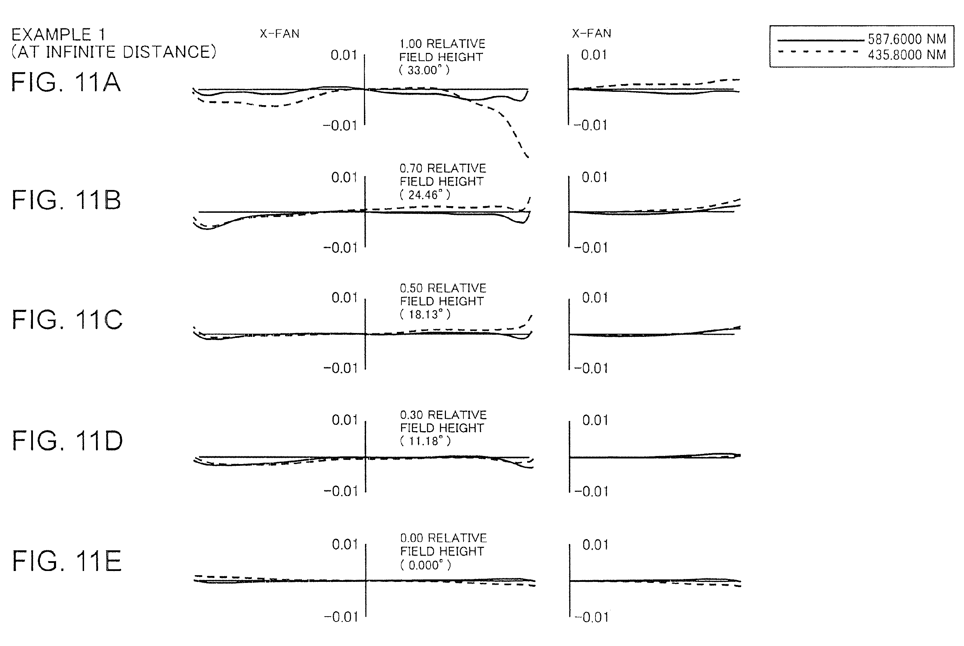

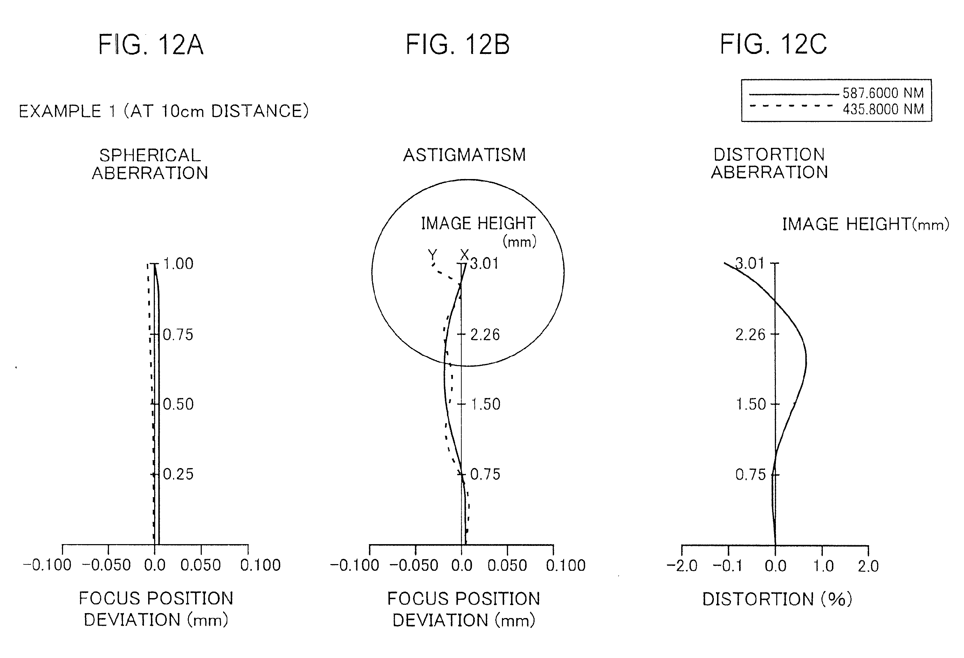

FIG. 5 is a cross sectional view showing a lens configuration of an imaging optical system as Example 1. FIG. 9 are longitudinal aberration diagrams of the imaging optical system as Example 1 at an infinite distance. FIG. 10 are transverse aberration diagrams of the imaging optical system as Example 1 at an infinite distance. FIG. 11 are longitudinal aberration diagrams of the imaging optical system as Example 1 at 10 cm distance. FIG. 12 are transverse aberration diagrams of the imaging optical system as Example 1 at 10 cm distance.

As shown in FIG. 5, the imaging optical system 1A as Example 1 is configured such that a first lens element L1, a second lens element L2, a third lens element L3, a fourth lens element L4, and a fifth lens element L5 are disposed in this order from the object side to the image side. In performing a focusing operation, all the first to fifth lens elements L1 to L5 are integrally moved in the optical axis AX direction.

More specifically, in the imaging optical system 1A as Example 1, the first to fifth lens elements L1 to L5 are configured as follows in the order from the object side to the image side.

The first lens element L1 is a biconvex positive lens element having a positive refractive power, the second lens element L2 is a negative meniscus lens element having a negative refractive power with a concave surface toward the image side, the third lens element L3 is a positive meniscus lens element having a positive refractive power with a convex surface toward the image side, the fourth lens element L4 is a positive meniscus lens element having a positive refractive power with a convex surface toward the image side, and the fifth lens element L5 is a biconcave negative lens element. Each of the first to fifth lens elements L1 to L5 has an aspherical shape on both surfaces thereof, and is a resin lens element. The image-side surface of the third lens element L3 has inflection points IPA3 and IPA3 on the profile of a cross section of the third lens element L3 along the optical axis AX (cross section of the third lens element L3 along the optical axis AX and including the optical axis AX) in a direction from the intersection with the optical axis AX toward an end of the effective area of the third lens element L3. The third lens element L3 has a region, in a peripheral area thereof radially away from the optical axis AX by a predetermined distance, having a negative refractive power on the cross section including the optical axis AX. Specifically, the third lens element L3 is a positive meniscus lens element having a positive refractive power with a convex surface toward the image side within a region (region of a circular shape in cross section) from the optical axis AX to a position corresponding to the predetermined distance, and is a negative meniscus lens element having a negative refractive power with a concave surface toward the image side within a region (region of an annular shape in cross section) from the aforementioned position corresponding to the predetermined distance to the end of the effective area. The fourth lens element L4 has inflection points IPA41 and IPA41 on the object-side surface thereof, and has inflection points IPA42 and IPA42 on the image-side surface thereof, on the profile of a cross section of the fourth lens element L4 along the center axis (optical axis AX) in a direction from the intersection with the optical axis AX toward an end of the effective area of the fourth lens element L4.

The optical diaphragm ST is disposed on the object side of the first lens element L1. The optical diaphragm ST may be an aperture stop, a mechanical shutter, or a variable aperture stop in the examples to be described later, as well as in Example 1.

The light receiving surface of an imaging element SR is disposed on the image side of the fifth lens element L5 via a parallel plate FT as a filter. The parallel plate FT may be one of the optical filters or a cover glass for the imaging element SR.

In FIG. 5, the symbol "ri" (i=1, 2, 3, ...) attached to each of the lens surfaces indicates the i-th lens surface counted from the object side. It should be noted that a surface of a cemented lens is counted as a lens surface. The surface attached with the asterisk "*" to the symbol "ri" indicates an aspherical surface. It should be noted that both surfaces of the parallel plate FT, and the light receiving surface of the imaging element SR are regarded as a surface, and both surfaces of the optical diaphragm ST are also regarded as a surface. The aforementioned handling and definition on the symbols also hold true to the examples to be described later. However, this does not mean that everything is the same between the examples. For instance, throughout the drawings showing the respective examples, the lens surface closest to the object side is attached with the same symbol "ri". However, as shown in the construction data to be described later, this does not mean that the curvatures of the lens surfaces attached with the same symbol are identical to each other throughout the examples.

In the imaging optical system 1A having the aforementioned configuration, light rays incident from the object side successively pass through the optical diaphragm ST, the first lens element L1, the second lens element L2, the third lens element L3, the fourth lens element L4, the fifth lens element L5, and the parallel plate FT along the optical axis AX, and form an optical image of an object on the light receiving surface of the imaging element SR. Then, the imaging element SR converts the optical image into an electrical signal. The electrical signal is applied with a specified digital image processing as necessary, and is stored as a digital image signal in a memory of a digital apparatus such as a digital camera, or transmitted to another digital apparatus by wired or wireless communication through an interface.

Construction data of the respective lens elements in the imaging optical system 1A as Example 1 is as follows.

Numerical Data in Example 1

Unit: mm

Lens Surface Data

| lens surface | r | d | nd | νd | ER |
|---|---|---|---|---|---|
| object plane | ∞ | ∞ | | | |
| 1 (front surface of aperture) | ∞ | 0.05 | | | 0.90 |
| 2 (back surface of aperture) | ∞ | -0.24 | | | 0.90 |
| 3* | 1.676 | 0.628 | 1.5447 | 56.15 | 0.94 |
| 4* | -13.857 | 0.055 | | | 0.95 |
| 5* | 4.012 | 0.28 | 1.63469 | 23.87 | 0.96 |
| 6* | 1.559 | 0.568 | | | 0.95 |
| 7* | -36.876 | 0.31 | 1.63469 | 23.87 | 1.07 |
| 8* | -35.075 | 0.415 | | | 1.23 |
| 9* | -6.434 | 0.865 | 1.5447 | 56.15 | 1.84 |
| 10* | -0.965 | 0.229 | | | 2.02 |
| 11* | -2.637 | 0.45 | 1.53048 | 55.72 | 2.29 |
| 12* | 1.582 | | variable | | 2.55 |
| 13 | ∞ | 0.3 | 1.51633 | 64.14 | 2.82 |
| 14 | ∞ | 0.4 | | | 2.88 |
| image plane | ∞ | | | | |

Aspherical Surface Data

Third surface

K=-2.4776E-02, A4=5.4737E-03, A6=1.8802E-03, A8=-3.1928E-03, A10=1.7037E-02, A12=-2.1868E-02, A14=8.4210E-03

Fourth surface

K=-2.9823E+01, A4=2.9864E-02, A6=3.6878E-02, A8=-4.3208E-02, A10=-2.3999E-02, A12=2.7062E-02

Fifth surface

K=-3.0000E+01, A4=-4.4484E-02, A6=1.4564E-01, A8=-1.2728E-01, A10=-3.2604E-02, A12=7.7790E-02, A14=-1.8876E-02

Sixth surface

K=-6.2952E+00, A4=4.7985E-02, A6=5.1872E-02, A8=-1.8852E-02, A10=-6.3501E-03, A12=-4.1075E-03, A14=2.2070E-02

Seventh surface

K=3.0000E+01, A4=-1.2218E-01, A6=-2.6536E-02, A8=6.2354E-02, A10=2.0372E-02, A12=-1.8554E-02, A14=-6.3386E-04

Eighth surface

K=3.0000E+01, A4=-1.0027E-01, A6=3.0627E-03, A8=1.9106E-02, A10=1.6054E-02, A12=-2.2771E-03, A14=-2.7944E-03

Ninth surface

K=7.8257E+00, A4=-3.7724E-04, A6=2.0421E-02, A8=-1.1047E-03, A10=-1.6207E-03, A12=2.6445E-04

Tenth surface

K=-4.0592E+00, A4=-4.3185E-02, A6=5.1578E-02, A8=-1.1842E-02, A10=6.5318E-04, A12=1.9046E-05

Eleventh surface

K=-3.0000E+01, A4=-1.4223E-02, A6=-1.5539E-03, A8=2.1085E-03, A10=-1.9864E-04, A12=-2.5376E-05, A14=2.8800E-06

Twelfth surface

K=-1.2523E+01, A4=-3.6784E-02, A6=7.2592E-03, A8=-1.4441E-03, A10=1.4444E-04, A12=-5.0337E-06, A14=3.2341E-08

Various data

| | |
|---|---|
| focal length (f) | 4.33 (mm) |
| F-number (Fno) | 2.4 |
| angle of view (2W) | 66.0 (deg) |
| image height (2Y) | 5.712 |

(continued)

| | |
|---|---|
| total length (TL) of lens system | 5.143 (mm) |
| Focal length of each lens element: | |
| first lens element L1 | 2.77 |
| second lens element L2 | -4.16 |
| third lens element L3 | 1050.32 |
| fourth lens element L4 | 1.97 |
| fifth lens element L5 | -1.79 |

The total length (TL) of the lens system in the aforementioned construction data is the total length (corresponding to the distance from the object-side surface of the first lens element to the imaging surface) of the lens system in the case where the object is located at an infinite distance. The same idea is also applied to the following examples.

In the aforementioned surface data, the lens surface No. corresponds to the number "i" in the symbol "ri" (i=1, 2, 3, ...) attached to each of the lens surfaces shown in FIG. 5. The surface attached with the asterisk "*" to the number "i" indicates an aspherical surface (a dioptric surface having an aspherical configuration, or a surface having a refractive function substantially equivalent to an aspherical surface).

Further, "r" denotes a curvature radius (unit: mm) of each surface, "d" denotes a lens surface interval on an optical axis (on-axis surface interval) in an infinity in-focus state (a focus state at an infinite distance), "nd" denotes a refractive index of each lens element with respect to d-line light (wavelength: 587.56 nm), "vd" denotes an Abbe number, and "ER" denotes an effective radius (mm). Since the surface of the optical diaphragm ST, both surfaces of the parallel plate FT, and the light receiving surface of the imaging element SR are flat surfaces, curvature radii of these surfaces are ∞ (infinite).

The aforementioned aspherical surface data shows the values of a second-order curved surface parameter (conical coefficient K) and of an aspherical coefficient Ai (i=4, 6, 8, 10, 12, 14, 16) of each surface defined as an aspherical surface (surface attached with the asterisk "*" to the number "i" in the surface data). The aspherical configuration of the optical plane is defined by the following conditional expression, using a local orthogonal coordinate system (x, y, z), in which a surface vertex is defined as the point of origin, and a direction from the object toward the imaging element is defined as the z-axis plus direction.

$$z(h) = ch^2 / [1 + \sqrt{\{1 - (1 + K)c^2 h^2\}}] + \sum Ai \cdot h^i$$

where

z(h): displacement in z-axis direction at height position h (with respect to surface vertex),
h: height in vertical direction with respect to z axis ($h^2 = x^2 + y^2$),
c: paraxial curvature (=1/curvature radius),
Ai: i-th order aspherical coefficient, and
K: second-order curved surface parameter (conical coefficient).

In the aforementioned aspherical surface data, the symbol "En" means ten to the power of n. For instance, "E+001" means ten to the power of +1, and "E-003" means ten to the power of -3.

The respective aberrations of the imaging optical system 1A as Example 1 having the aforementioned lens arrangement and construction are shown in FIGS. 10A to 13E.

FIGS. 10A to 10C are longitudinal aberration diagrams at an infinite distance. FIGS. 12A to 12C are longitudinal aberration diagrams at 10 cm distance. FIG. 10A and FIG. 12A, FIG. 10B and FIG. 12B, and FIG. 10C and FIG. 12C respectively show, in this order, spherical aberrations (sine condition) (LONGITUDINAL SPHERICAL ABERRATION), astigmatisms (ASTIGMATISM FIELD CURVE), and distortion aberrations (DISTORTION). A horizontal axis of spherical aberration represents a focus position deviation in mm, and a vertical axis thereof represents a normalized value at a maximum incident height. A horizontal axis of astigmatism represents a focus position deviation in mm, and a vertical axis thereof represents an image height in mm. A horizontal axis of distortion represents a ratio (%) of an actual image height to an ideal image height, and a vertical axis thereof represents an image height in mm. In the astigmatism diagrams, the broken line and the solid line respectively indicate results on a tangential (meridional) surface and results on a sagittal (radial) surface.

In the spherical aberration diagrams, the solid line indicates aberration of d-line light (wavelength: 587.56 nm), and the broken line indicates aberration of g-line light (wavelength: 435.84 nm). The astigmatism diagrams and the distortion diagrams show results in the case of using d-line light (wavelength: 587.56 nm).

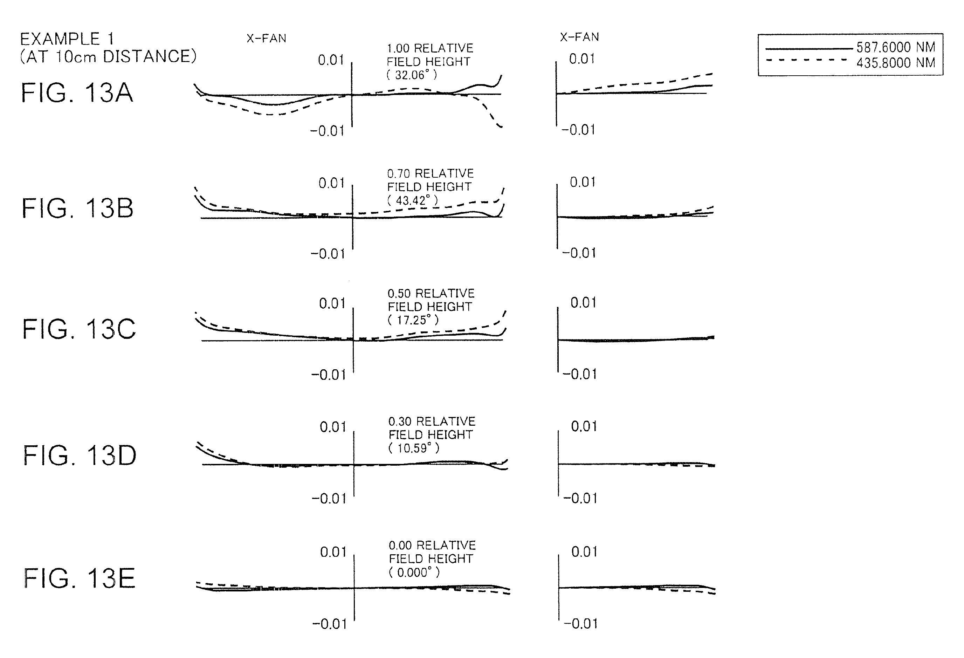

Further, FIGS. 11A to 11E are transverse aberration diagrams at an infinite distance, and FIGS. 13A to 13E are transverse aberration diagrams at 10 cm distance. In FIGS. 11A to 11E and in FIGS. 13A to 13E, the left-side graphs show results on a tangential (meridional) surface, and the right-side graphs show results on a sagittal (radial) surface. FIGS. 11A and 13A, FIGS. 11B and 13B, FIGS. 11C and 13C, FIGS. 11D and 13D, and FIGS. 11E and 13E respectively show, in this order, a position corresponding to 100%, a position corresponding to 70%, a position corresponding to 50%, a position corresponding to 30%, and a center position, assuming that the length from the center (optical axis AX) to the end of the effective area of the lens element is 100%. The horizontal axes in FIGS. 11A to 11E and in FIGS. 13A to 13E represent a height of an incident light ray with respect to a principal light ray in mm, and the vertical axes thereof represent a deviation from the principal light ray on the image plane. In the transverse aberration diagrams, the solid line and the broken line respectively represent aberration of d-line light (wavelength: 587.56 nm) and aberration of g-line light (wavelength: 435.84 nm), as in the case of the longitudinal aberration diagrams.

The aforementioned handling on the symbols also hold true to the construction data and to the respective aberrations in the following examples.

[Example 2]

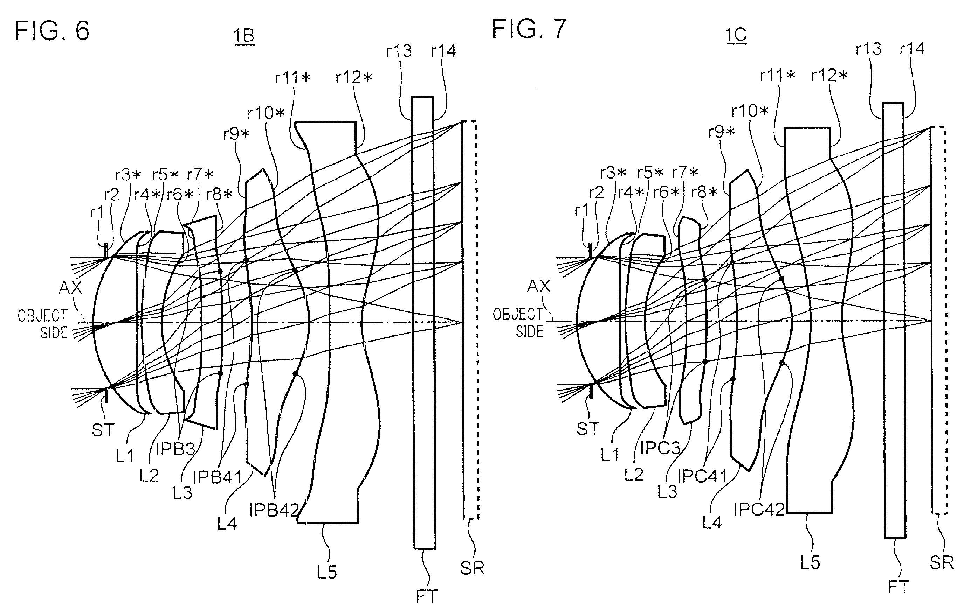

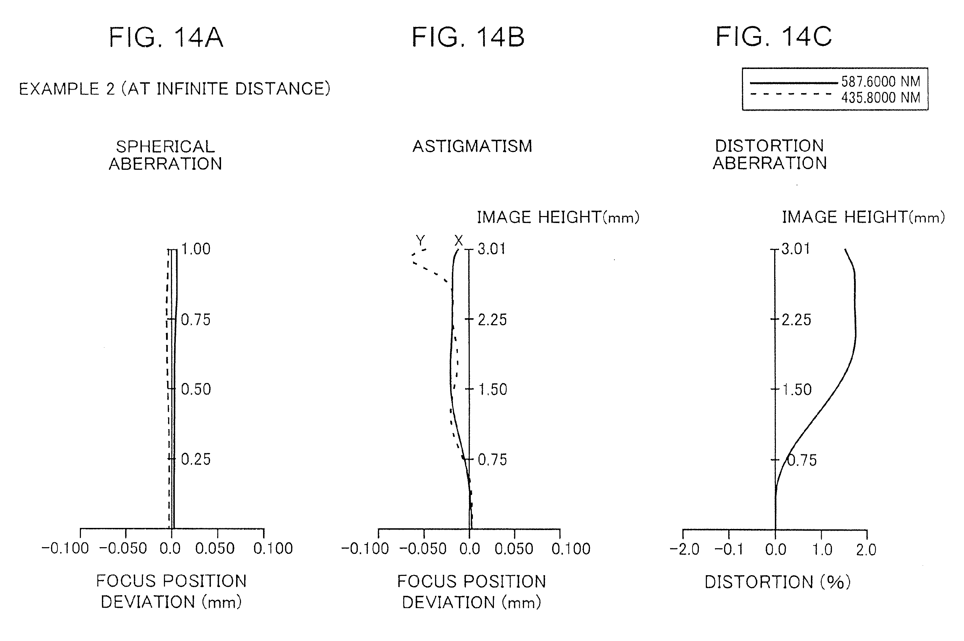

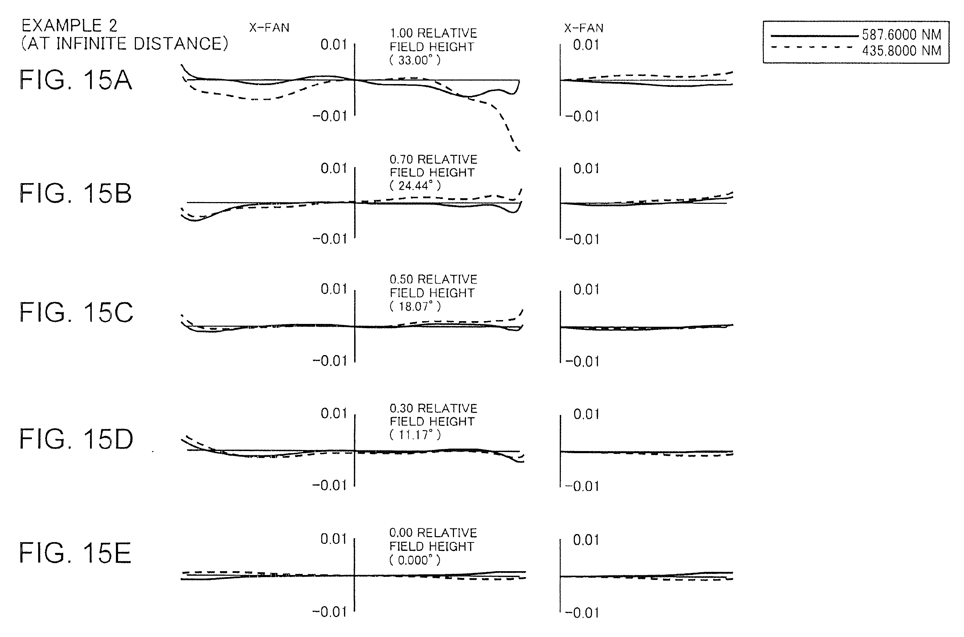

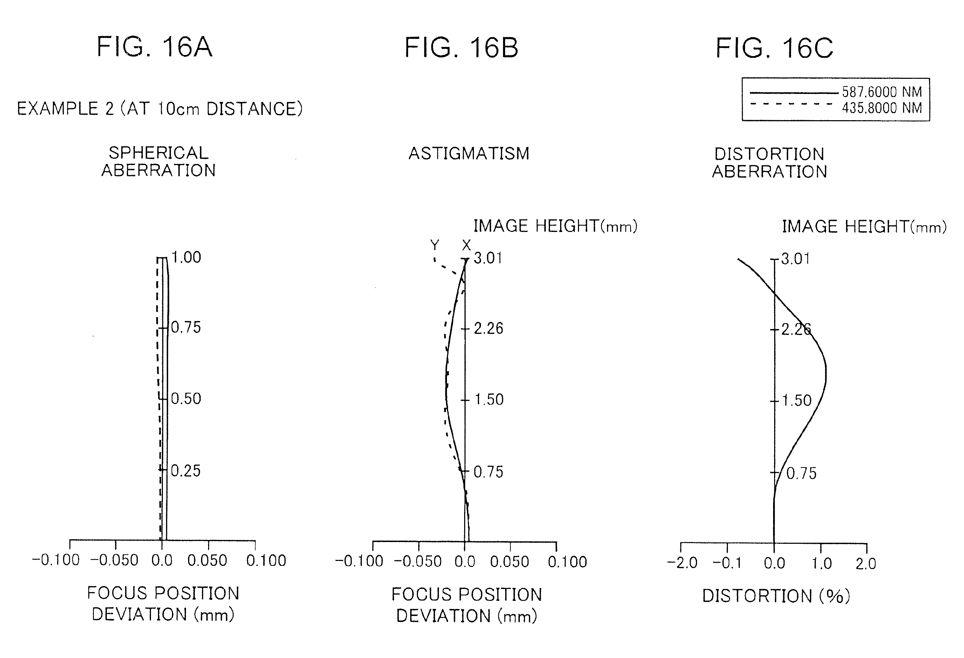

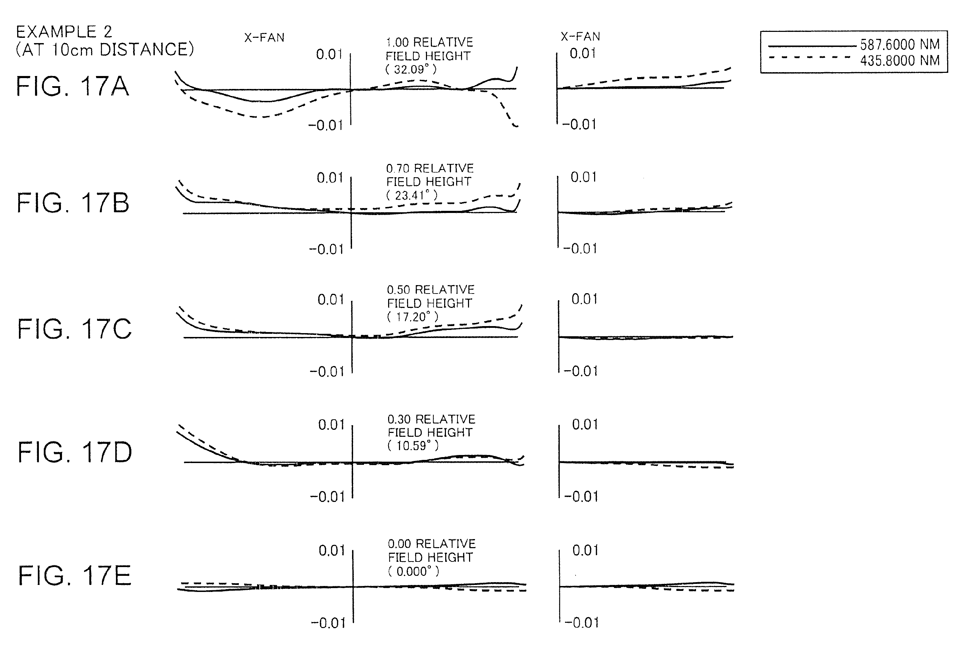

FIG. 6 is a cross sectional view showing a lens configuration of an imaging optical system as Example 2. FIGS. 14A to 14C are longitudinal aberration diagrams of the imaging optical system as Example 2 at an infinite distance. FIGS. 15A to 15E are transverse aberration diagrams of the imaging optical system as Example 2 at an infinite distance. FIGS. 16A to 16E are longitudinal aberration diagrams of the imaging optical system as Example 2 at 10 cm distance. FIGS. 17A to 17E are transverse aberration diagrams of the imaging optical system as Example 2 at 10 cm distance.

As shown in FIG. 6, the imaging optical system 1B as Example 2 is configured such that a first lens element L1, a second lens element L2, a third lens element L3, a fourth lens element L4, and a fifth lens element L5 are disposed in this order from the object side to the image side. In performing a focusing operation, all the first to fifth lens elements L1 to L5 are integrally moved in the optical axis AX direction.

More specifically, in the imaging optical system 1B as Example 2, the first to fifth lens elements L1 to L5 are configured as follows in the order from the object side to the image side.

The first lens element L1 is a biconvex positive lens element having a positive refractive power, the second lens element L2 is a negative meniscus lens element having a negative refractive power with a concave surface toward the image side, the third lens element L3 is a positive meniscus lens element having a positive refractive power with a convex surface toward the image side, the fourth lens element L4 is a positive meniscus lens element having a positive refractive power with a convex surface toward the image side, and the fifth lens element L5 is a biconcave negative lens element. Each of the first to fifth lens elements L1 to L5 has an aspherical shape on both surfaces thereof, and is a resin lens element. The image-side surface of the third lens element L3 has inflection points IPB3 and IPB3 on the profile of a cross section of the third lens element L3 along the optical axis AX (cross section of the third lens element L3 along the optical axis AX and including the optical axis AX) in a direction from the intersection with the optical axis AX toward an end of the effective area of the third lens element L3. The third lens element L3 has a region, in a peripheral area thereof radially away from the optical axis AX by a predetermined distance, having a negative refractive power on the cross section including the optical axis AX. The fourth lens element L4 has inflection points IPB41 and IPB41 on the object-side surface thereof, and has inflection points IPB42 and IPB42 on the image-side surface thereof, on the profile of a cross section of the fourth lens element L4 along the center axis (optical axis AX) in a direction from the intersection with the optical axis AX toward an end of the effective area of the fourth lens element L4. The optical diaphragm ST is disposed on the object side of the first lens element L1. The light receiving surface of the imaging element SR is disposed on the image side of the fifth lens element L5 via a parallel plate FT as a filter.

In the imaging optical system 1B having the aforementioned configuration, light rays incident from the object side successively pass through the optical diaphragm ST, the first lens element L1, the second lens element L2, the third lens element L3, the fourth lens element L4, the fifth lens element L5, and the parallel plate FT along the optical axis AX, and form an optical image of an object on the light receiving surface of the imaging element SR. Then, the imaging element SR converts the optical image into an electrical signal. The electrical signal is processed as necessary as in the case of Example 1.

Construction data of the respective lens elements in the imaging optical system 1B as Example 2 is as follows.

Numerical Data in Example 2

Unit: mm

Lens Surface Data

| lens surface | r | d | nd | νd | ER |
|---|---|---|---|---|---|
| object plane | ∞ | ∞ | | | |
| 1 (aperture) | ∞ | 0.050 | | | 0.90 |
| 2 | ∞ | -0.234 | | | 0.90 |
| 3* | 1.705 | 0.619 | 1.5447 | 56.15 | 0.94 |
| 4* | -12.589 | 0.060 | | | 0.95 |
| 5* | 3.813 | 0.280 | 1.6347 | 23.87 | 0.97 |
| 6* | 1.487 | 0.551 | | | 0.96 |
| 7* | 31.633 | 0.284 | 1.6347 | 23.87 | 1.09 |
| 8* | 227.339 | 0.411 | | | 1.22 |
| 9* | -4.082 | 0.791 | 1.5447 | 56.15 | 1.78 |
| 10* | -1.143 | 0.280 | | | 1.95 |
| 11* | 100.000 | 0.450 | 1.5305 | 55.72 | 2.29 |
| 12* | 1.330 | 0.718 | | | 2.52 |
| 13 | ∞ | 0.300 | 1.5163 | 64.14 | 2.81 |
| 14 | ∞ | 0.400 | | | 2.87 |
| image plane | ∞ | | | | |

Aspherical Surface Data

third surface

K=-2.4169E-02, A4=4.6039E-03, A6=4.4299E-03, A8=-6.2967E-03, A10=1.9604E-02, A12=-2.2153E-02, A14=8.7093E-03

fourth surface

K=-3.0000E+01, A4=3.8597E-02, A6=2.8682E-02, A8=-3.8607E-02, A10=-2.1746E-02, A12=2.6097E-02

fifth surface

K=-3.0000E+01, A4=-4.0111E-02, A6=1.4715E-01, A8=-1.3904E-01, A10=-2.7191E-02, A12=8.4486E-02, A14=-2.4038E-02

sixth surface

K=-6.2347E+00, A4=5.2844E-02, A6=4.9251E-02, A8=-2.9444E-02, A10=-5.3293E-03, A12=5.1649E-03, A14=1.4224E-02

seventh surface

K=3.0000E+01, A4=-1.2554E-01, A6=-3.2435E-02, A8=6.8221E-02, A10=1.5202E-02, A12=-1.5494E-02, A14=-1.1663E-03

eighth surface

K=3.0000E+01, A4=-1.0644E-01, A6=7.2777E-03, A8=1.3041E-02, A10=2.0172E-02, A12=-2.2879E-03, A14=-3.2202E-03

ninth surface

K=3.0525E+00, A4=3.0359E-02, A6=1.5834E-02, A8=-1.5209E-03, A10=-1.5675E-03, A12=3.1505E-04

tenth surface

K=-4.3678E+00, A4=-4.2739E-02, A6=5.2265E-02, A8=-1.2487E-02, A10=6.3187E-04, A12=4.0980E-05

elenveth surface

K=3.0000E+01, A4=-3.4640E-02, A6=6.1301E-04, A8=2.1159E-03, A10=-2.0591E-04, A12=-2.3737E-05, A14=2.7215E-06

twelfth surface

K=-8.1632E+00, A4=-4.4745E-02, A6=8.4333E-03, A8=-1.6509E-03, A10=1.7608E-04, A12=-6.1754E-06, A14=-3.5212E-08

Various data

| | |
|---|---|
| focal length (f) | 4.32 (mm) |
| F-number (Fno) | 2.4 |
| angle of view (2W) | 66.0 (deg) |
| image height (2Y) | 5.712 |
| total length (TL) of lens system | 5.144 (mm) |
| Focal length of each lens element: | |
| first lens element L1 | 2.79 |
| second lens element L2 | -3.99 |
| third lens element L3 | 57.30 |
| fourth lens element L4 | 2.65 |
| fifth lens element L5 | -2.53 |

The spherical aberrations (sine condition), astigmatisms, distortion aberrations, and transverse aberrations of the imaging optical system 1B as Example 2 having the aforementioned lens arrangement and construction are shown in FIGS. 14A to 17E.

[Example 3]

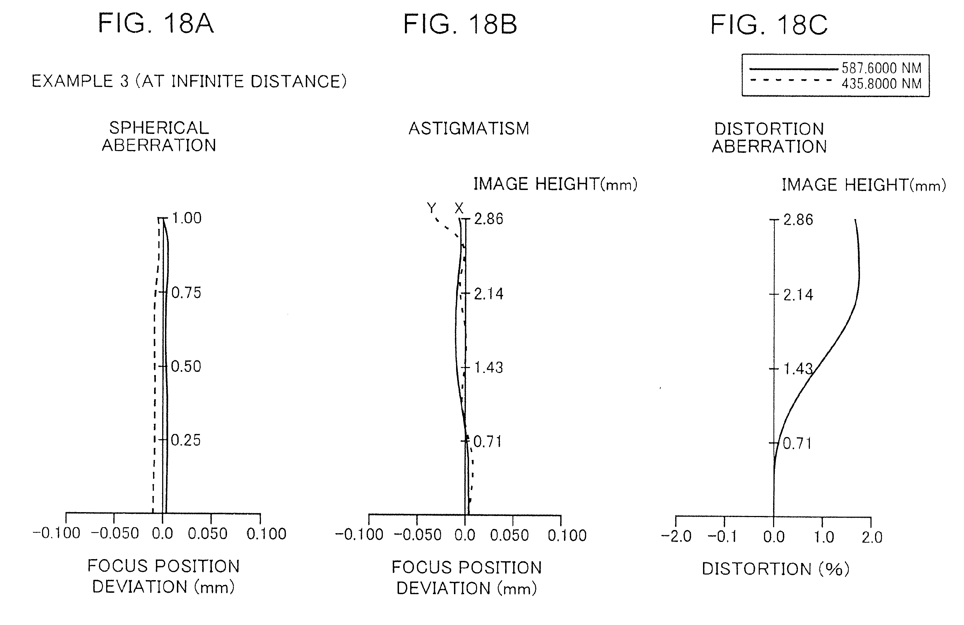

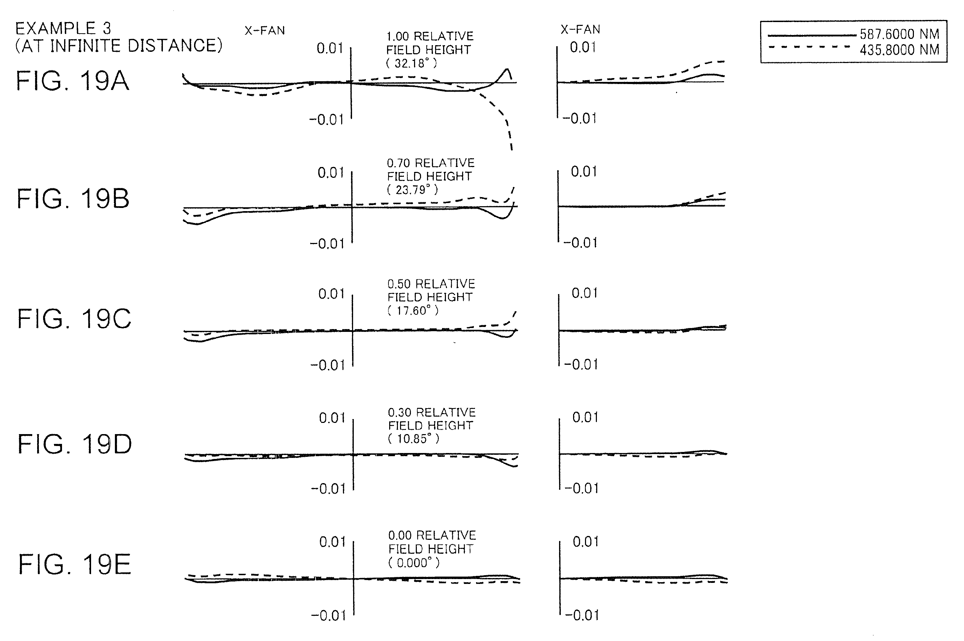

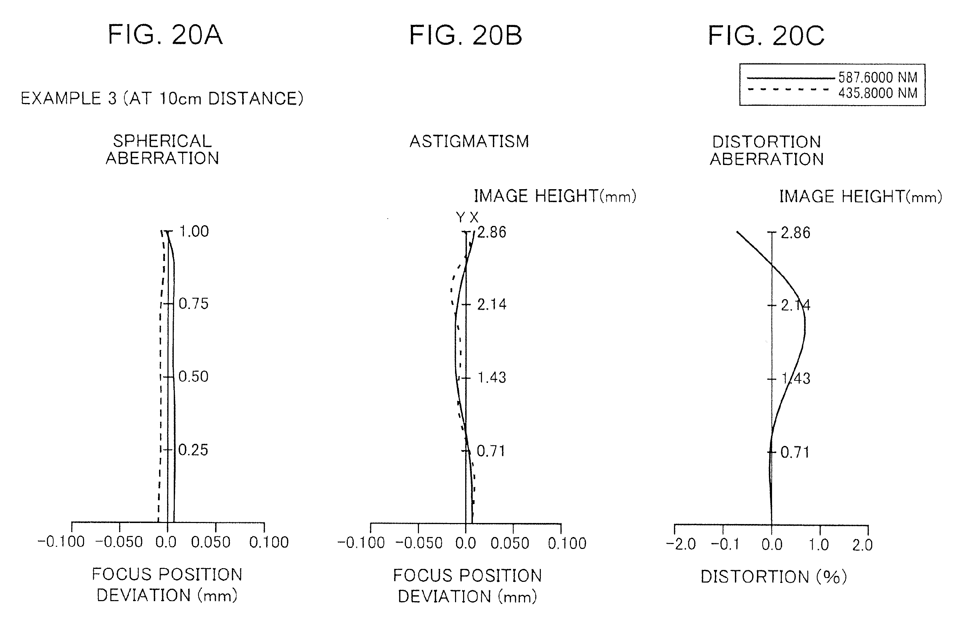

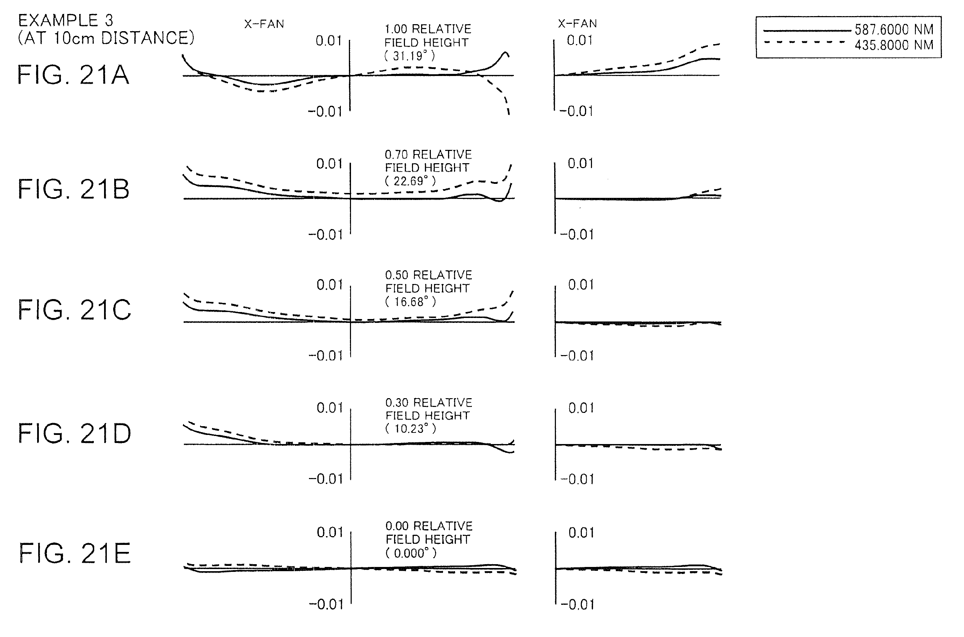

FIG. 7 is a cross sectional view showing a lens configuration of an imaging optical system as Example 3. FIGS. 18A to 18C are longitudinal aberration diagrams of the imaging optical system as Example 3 at an infinite distance. FIGS. 19A to 19E are transverse aberration diagrams of the imaging optical system as Example 3 at an infinite distance. FIGS. 20A to 20E are longitudinal aberration diagrams of the imaging optical system as Example 3 at 10 cm distance. FIGS. 21A to 21E are transverse aberration diagrams of the imaging optical system as Example 3 at 10 cm distance.

As shown in FIG. 7, the imaging optical system 1C as Example 3 is configured such that a first lens element L1, a second lens element L2, a third lens element L3, a fourth lens element L4, and a fifth lens element L5 are disposed in this order from the object side to the image side. In performing a focusing operation, all the first to fifth lens elements L1 to L5 are integrally moved in the optical axis AX direction.

More specifically, in the imaging optical system 1C as Example 3, the first to fifth lens elements L1 to L5 are configured as follows in the order from the object side to the image side.

The first lens element L1 is a biconvex positive lens element having a positive refractive power, the second lens element L2 is a negative meniscus lens element having a negative refractive power with a concave surface toward the image side, the third lens element L3 is a positive meniscus lens element having a positive refractive power with a convex surface toward the image side, the fourth lens element L4 is a positive meniscus lens element having a positive refractive power with a convex surface toward the image side, and the fifth lens element L5 is a biconcave negative lens element. Each of the first to fifth lens elements L1 to L5 has an aspherical shape on both surfaces thereof, and is a resin lens element. The image-side surface of the third lens element L3 has inflection points IPC3 and IPC3 on the profile of a cross section of the third lens element L3 along the optical axis AX (cross section of the third lens element L3 along the optical axis AX and including the optical axis AX) in a direction from the intersection with the optical axis AX toward an end of the effective area of the third lens element L3. The third lens element L3 has a region, in a peripheral area thereof radially away from the optical axis AX by a predetermined distance, having a negative refractive power on the cross section including the optical axis AX. The fourth lens element L4 has inflection points IPC41 and IPC41 on the object-side surface thereof, and has inflection points IPC42 and IPC42 on the image-side surface thereof, on the profile of a cross section of the fourth lens element L4 along the center axis (optical axis AX) in a direction from the intersection with the optical axis AX toward an end of the effective area of the fourth lens element L4. The optical diaphragm ST is disposed on the object side of the first lens element L1. The light receiving surface of the imaging element SR is disposed on the image side of the fifth lens element L5 via a parallel plate FT as a filter.

In the imaging optical system 1 C having the aforementioned configuration, light rays incident from the object side successively pass through the optical diaphragm ST, the first lens element L1, the second lens element L2, the third lens element L3, the fourth lens element L4, the fifth lens element L5, and the parallel plate FT along the optical axis AX, and form an optical image of an object on the light receiving surface of the imaging element SR. Then, the imaging element SR converts the optical image into an electrical signal. The electrical signal is processed as necessary as in the case of Example 1.

Construction data of the respective lens elements in the imaging optical system 1C as Example 3 is as follows.

Numerical Data in Example 3

Unit: mm

Lens Surface Data

| lens surface | r | d | nd | νd | ER |
|---|---|---|---|---|---|
| object plane | ∞ | ∞ | | | |
| 1 (aperture) | ∞ | 0.050 | | | 0.93 |
| 2 | ∞ | -0.249 | | | 0.93 |
| 3* | 1.638 | 0.628 | 1.5447 | 56.15 | 0.99 |
| 4* | -29.808 | 0.074 | | | 0.98 |
| 5* | 3.834 | 0.280 | 1.6347 | 23.87 | 0.99 |
| 6* | 1.575 | 0.598 | | | 0.96 |
| 7* | -27.371 | 0.290 | 1.6347 | 23.87 | 1.10 |
| 8* | -17.083 | 0.439 | | | 1.24 |
| 9* | -6.055 | 0.787 | 1.5447 | 56.15 | 1.82 |
| 10* | -1.099 | 0.270 | | | 2.00 |
| 11* | -2.700 | 0.450 | 1.5305 | 55.72 | 2.26 |
| 12* | 1.897 | 0.614 | | | 2.52 |
| 13 | ∞ | 0.300 | 1.51633 | 64.14 | 2.80 |
| 14 | ∞ | 0.400 | | | 2.87 |
| image plane | ∞ | | | | |

Aspherical Surface Data

third surface

K=-2.6161E-02, A4=5.5904E-03, A6=1.1300E-03, A8=9.7781E-04, A10=1.3909E-02, A12=-2.2800E-02, A14=1.0606E-02

fourth surface

K=3.0000E+01, A4=7.2840E-03, A6=4.9916E-02, A8=-4.2139E-02, A10=-2.9691E-02, A12=3.2259E-02

fifth surface

K=-3.0000E+01, A4=-4.4875E-02, A6=1.2052E-01, A8=-1.1603E-01, A10=-2.3749E-02, A12=7.5959E-02, A14=-2.0446E-02

sixth surface

K=-5.7374E+00, A4=5.1707E-02, A6=4.6553E-02, A8=-2.1443E-02, A10=-4.2166E-03, A12=-6.3929E-03, A14=2.9482E-02

seventh surface

K=-3.0000E+01, A4=-1.0884E-01, A6=-7.3303E-03, A8=5.5694E-02, A10=7.3036E-03, A12=-1.7571E-02, A14=2.2924E-03

eighth surface

K=-2.3644E+01, A4=-9.8793E-02, A6=1.2841E-02, A8=1.8725E-02, A10=1.3480E-02, A12=-2.2323E-03, A14=-2.5965E-03

ninth surface

K=7.4928E+00, A4=-6.5160E-03, A6=1.9507E-02, A8=-3.3695E-04, A10=-1.6253E-03, A12=2.6321E-04

tenth surface

K=-4.2553E+00, A4=-3.0138E-02, A6=4.4690E-02, A8=-1.1292E-02, A10=7.5563E-04, A12=1.1620E-05

eleventh surface

K=-2.4611E+01, A4=-1.4089E-02, A6=-8.1249E-04, A8=2.0343E-03, A10=-2.1671E-04, A12=-2.5477E-05, A14=3.2083E-06

twelfth surface

K=-1.4309E+01, A4=-3.5876E-02, A6=6.9090E-03, A8=-1.3921E-03, A10=1.2801E-04, A12=-1.9273E-06, A14=-1.3499E-07

Various Data

| | |
|---|---|
| focal length (f) | 4.46 (mm) |
| F-number (Fno) | 2.4 |
| angle of view (2W) | 64.4 (deg) |
| image height (2Y) | 5.712 |
| total length (TL) of lens system | 5.13 (mm) |
| Focal length of each lens element: | |
| first lens element L1 | 2.86 |
| second lens element L2 | -4.38 |
| third lens element L3 | 70.14 |

(continued)

| Focal length of each lens element: | |
| --- | --- |
| fourth lens element L4 | 2.32 |
| fifth lens element L5 | -2.02 |

The spherical aberrations (sine condition), astigmatisms, distortion aberrations, and transverse aberrations of the imaging optical system 1C as Example 3 having the aforementioned lens arrangement and construction are shown in FIGS. 18A to 21E.

[Example 4]

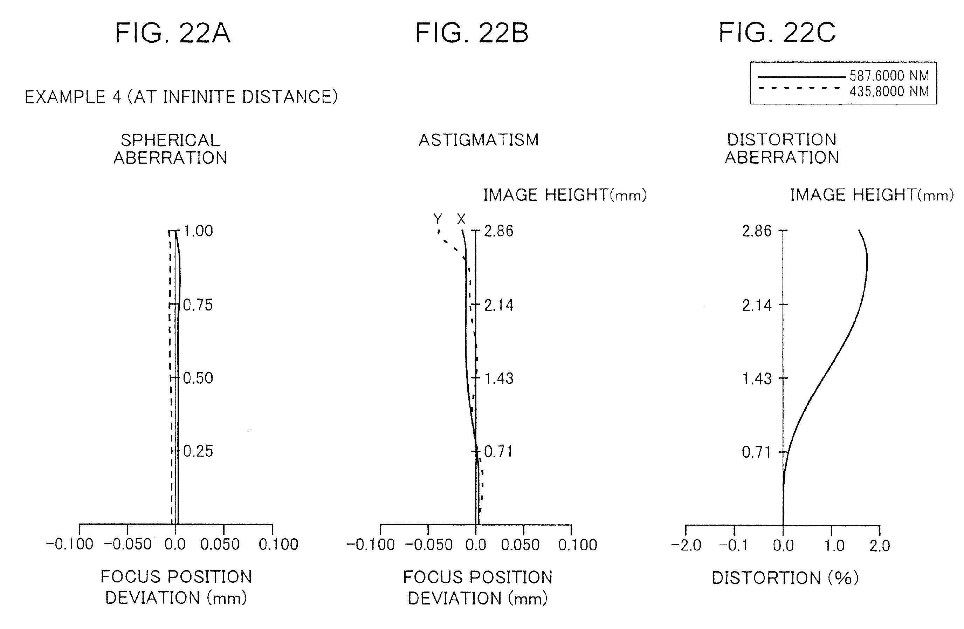

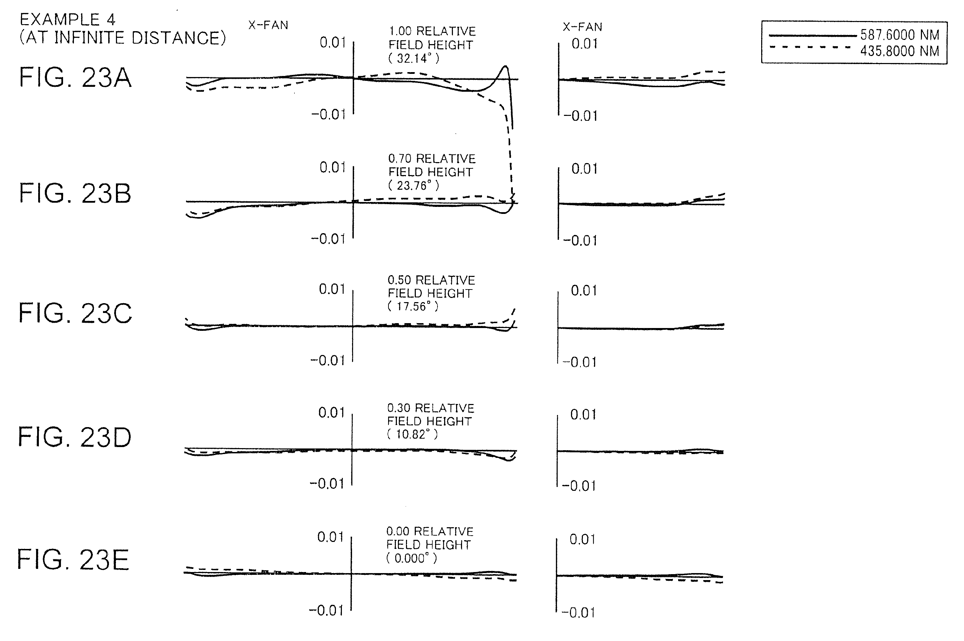

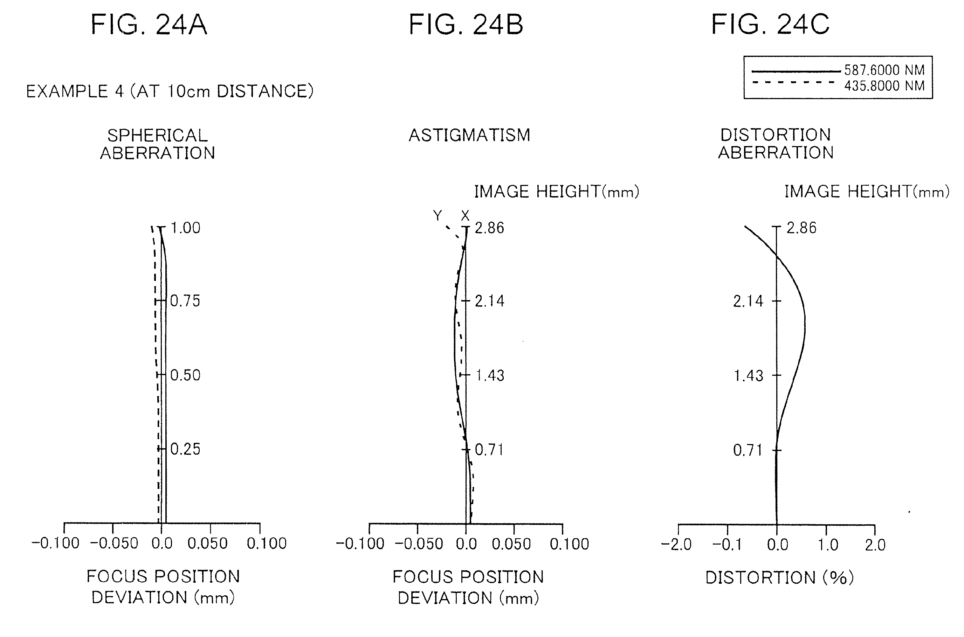

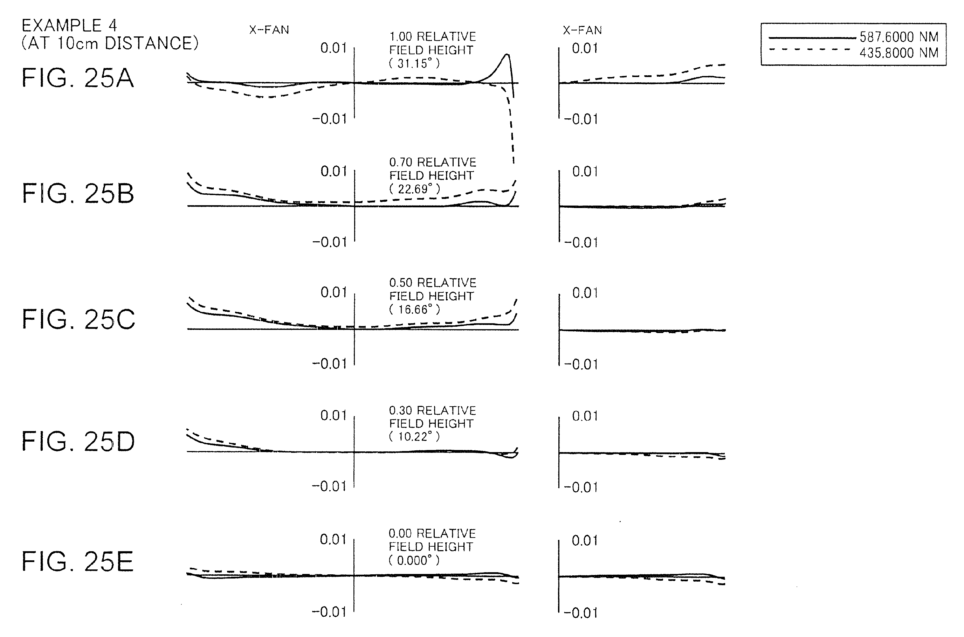

FIG. 8 is a cross sectional view showing a lens configuration of an imaging optical system as Example 4. FIGS. 22A to 22C are longitudinal aberration diagrams of the imaging optical system as Example 4 at an infinite distance. FIGS. 23A to 23E are transverse aberration diagrams of the imaging optical system as Example 4 at an infinite distance. FIGS. 24A to 24E are longitudinal aberration diagrams of the imaging optical system as Example 4 at 10 cm distance. FIGS. 25A to 25E are transverse aberration diagrams of the imaging optical system as Example 4 at 10 cm distance.

As shown in FIG. 8, the imaging optical system 1D as Example 4 is configured such that a first lens element L1, a second lens element L2, a third lens element L3, a fourth lens element L4, and a fifth lens element L5 are disposed in this order from the object side to the image side. In performing a focusing operation, all the first to fifth lens elements L1 to L5 are integrally moved in the optical axis AX direction.

More specifically, in the imaging optical system 1B as Example 2, the first to fifth lens elements L1 to L5 are configured as follows in the order from the object side to the image side.

The first lens element L1 is a biconvex positive lens element having a positive refractive power, the second lens element L2 is a negative meniscus lens element having a negative refractive power with a concave surface toward the image side, the third lens element L3 is a biconvex positive lens element having a positive refractive power with a convex surface toward the image side, the fourth lens element L4 is a positive meniscus lens element having a positive refractive power with a convex surface toward the image side, and the fifth lens element L5 is a biconcave negative lens element. Each of the first to fifth lens elements L1 to L5 has an aspherical shape on both surfaces thereof, and is a resin lens element. The image-side surface of the third lens element L3 has inflection points IPD3 and IPD3 on the profile of a cross section of the third lens element L3 along the optical axis AX (cross section of the third lens element L3 along the optical axis AX and including the optical axis AX) in a direction from the intersection with the optical axis AX toward an end of the effective area of the third lens element L3. The third lens element L3 has a region, in a peripheral area thereof radially away from the optical axis AX by a predetermined distance, having a negative refractive power on the cross section including the optical axis AX. The fourth lens element L4 has inflection points IPD41 and IPD41 on the object-side surface thereof, and has inflection points IPD42 and IPD42 on the image-side surface thereof, on the profile of a cross section of the fourth lens element L4 along the center axis (optical axis AX) in a direction from the intersection with the optical axis AX toward an end of the effective area of the fourth lens element L4. The optical diaphragm ST is disposed on the object side of the first lens element L1. The light receiving surface of the imaging element SR is disposed on the image side of the fifth lens element L5 via a parallel plate FT as a filter.

In the imaging optical system 1D having the aforementioned configuration, light rays incident from the object side successively pass through the optical diaphragm ST, the first lens element L1, the second lens element L2, the third lens element L3, the fourth lens element L4, the fifth lens element L5, and the parallel plate FT along the optical axis AX, and form an optical image of an object on the light receiving surface of the imaging element SR. Then, the imaging element SR converts the optical image into an electrical signal. The electrical signal is processed as necessary as in the case of Example 1.

Construction data of the respective lens elements in the imaging optical system 1D as Example 4 is as follows.

Numerical Data in Example 4

Unit: mm

Lens Surface Data

| lens surface | r | d | nd | νd | ER |
|---|---|---|---|---|---|
| object plane | ∞ | ∞ | | | |
| 1 (aperture) | ∞ | 0.050 | | | 0.93 |
| 2 | ∞ | -0.230 | | | 0.93 |
| 3* | 1.714 | 0.643 | 1.5447 | 56.15 | 1.00 |
| 4* | -15.981 | 0.067 | | | 0.99 |
| 5* | 3.558 | 0.280 | 1.6347 | 23.87 | 1.00 |
| 6* | 1.482 | 0.658 | | | 0.98 |
| 7* | 119.637 | 0.304 | 1.6347 | 23.87 | 1.19 |
| 8* | -183.459 | 0.373 | | | 1.32 |
| 9* | -8.273 | 0.915 | 1.5447 | 56.15 | 1.89 |
| 10* | -1.056 | 0.239 | | | 2.06 |
| 11* | -2.874 | 0.460 | 1.5305 | 55.72 | 2.28 |
| 12* | 1.654 | 0.641 | | | 2.54 |
| 13 | ∞ | 0.300 | 1.5163 | 64.14 | 2.79 |
| 14 | ∞ | 0.400 | | | 2.85 |
| image plane | ∞ | | | | |

Aspherical Surface Data

third surface

K=4.3605E-02, A4=6.2638E-03, A6=1.2637E-03, A8=4.3834E-03, A10=1.0022E-02, A12=-1.9394E-02, A14=1.1590E-02

fourth surface

K=-1.0376E+01, A4=3.7543E-02, A6=2.1767E-02, A8=-2.6902E-02, A10=4.5955E-04, A12=-1.5988E-02, A14=2.4376E-02

fifth surface

K=-2.7000E+01, A4=-2.8530E-02, A6=9.2742E-02, A8=-9.1092E-02, A10=-1.9180E-02, A12=4.5222E-02, A14=-5.0635E-03

sixth surface

K=-5.5170E+00, A4=5.1131E-02, A6=3.6646E-02, A8=-1.7969E-02, A10=-3.1023E-03, A12=-9.0009E-03, A14=2.1984E-02

seventh surface

K=2.7000E+01, A4=-9.8071E-02, A6=-1.5086E-02, A8=6.4001E-02, A10=-2.4378E-03, A12=-1.4545E-02, A14=3.2187E-03

eighth surface

K=-2.7000E+01, A4=-8.7815E-02, A6=2.5544E-03, A8=2.3277E-02, A10=1.1297E-02, A12=-7.2293E-03, A14=2.1546E-04

ninth surface

K=1.4279E+01, A4=-3.1965E-04, A6=1.7974E-02, A8=-8.8484E-04, A10=-1.5896E-03, A12=3.1940E-04, A14=-1.1856E-05

tenth surface

K=-4.2286E+00, A4=-3.5281E-02, A6=4.6250E-02, A8=-1.1058E-02, A10=7.3729E-04, A12=2.1758E-06

eleventh surface

K=-2.7000E+01, A4=-2.3263E-02, A6=3.5427E-03, A8=1.4390E-03, A10=-2.7083E-04, A12=-2.5351E-06, A14=1.4468E-06

twelfth surface

K=-1.2384E+01, A4=-3.7733E-02, A6=7.7759E-03, A8=-1.5034E-03, A10=1.6735E-04, A12=-9.6904E-06, A14=3.5000E-07

Various Data

| focal length (f) | 4.47 (mm) |
|---|---|
| F-number (Fno) | 2.4 |
| angle of view (2W) | 64.3 (deg) |
| image height (2Y) | 5.712 |
| total length (TL) of lens system | 5.28 (mm) |
| Focal length of each lens element: | |
| first lens element L1 | 2.87 |
| second lens element L2 | -4.18 |
| third lens element L3 | 113.04 |
| fourth lens element L4 | 2.12 |
| fifth lens element L5 | -1.90 |

The spherical aberrations (sine condition), astigmatisms, distortion aberrations, and transverse aberrations of the imaging optical system 1D as Example 4 having the aforementioned lens arrangement and construction are shown in FIGS. 22A to 25E.

[Example 5]

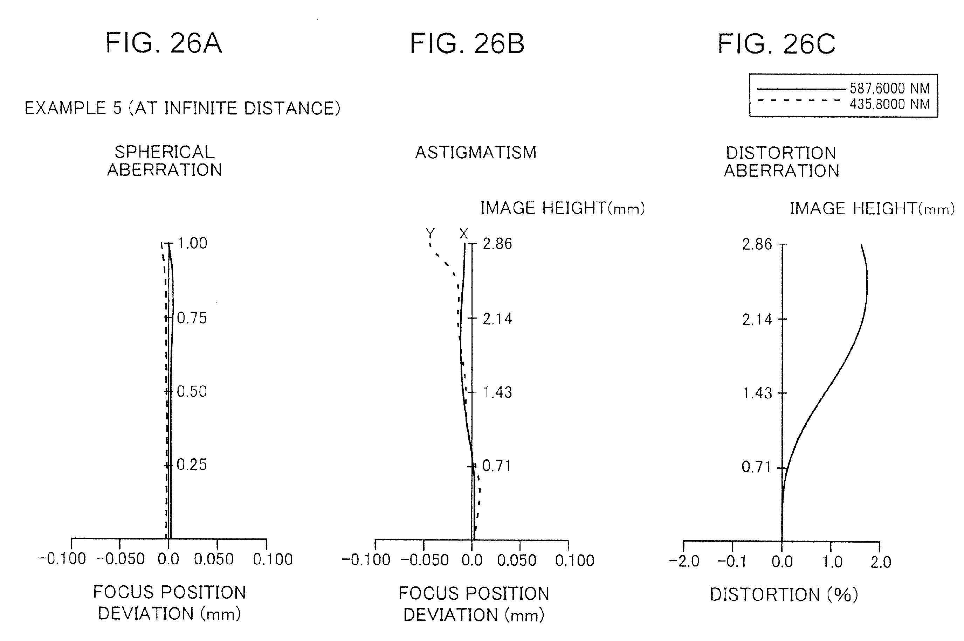

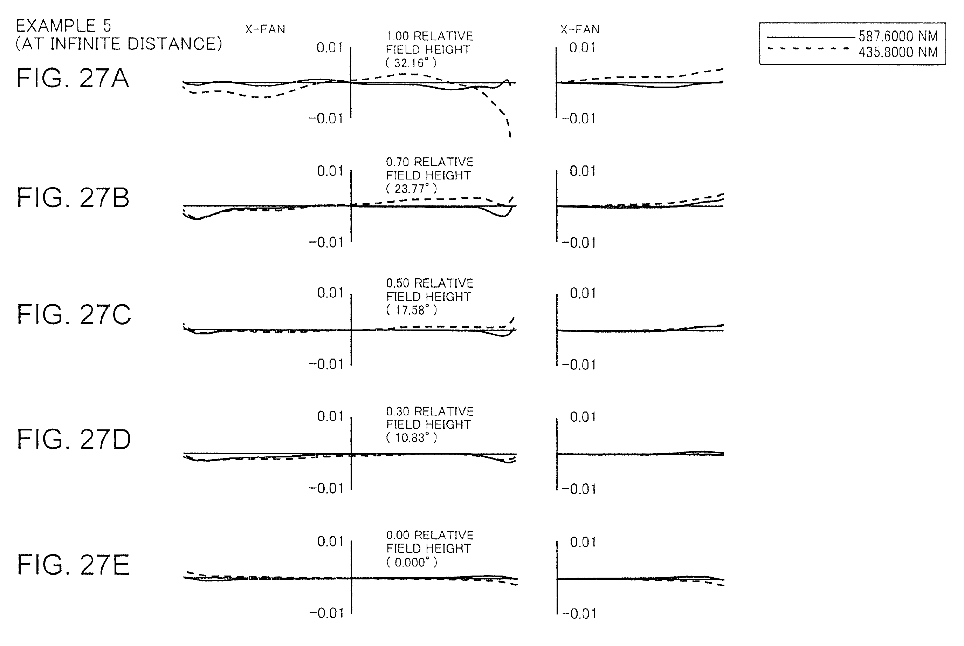

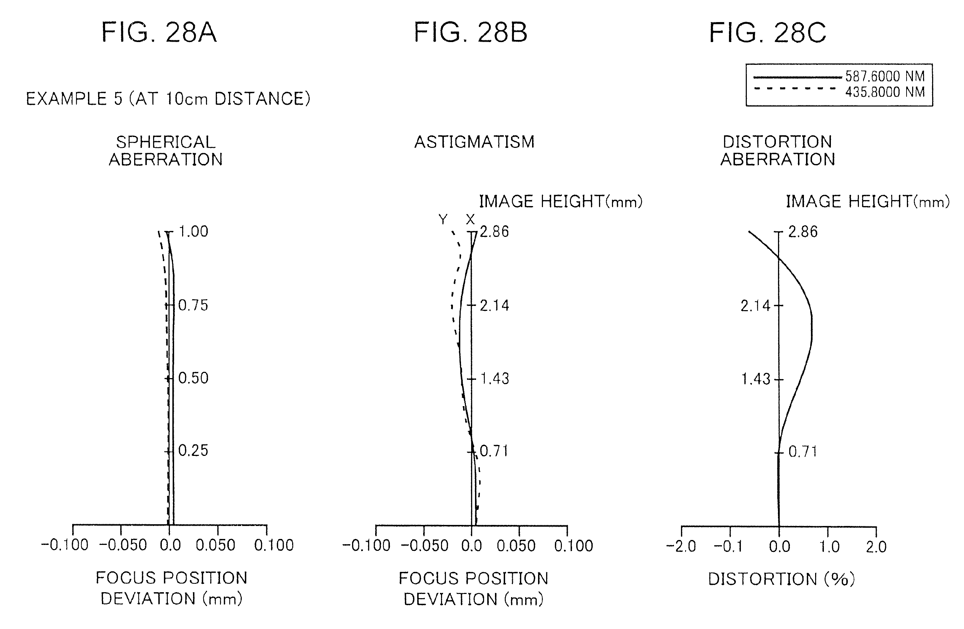

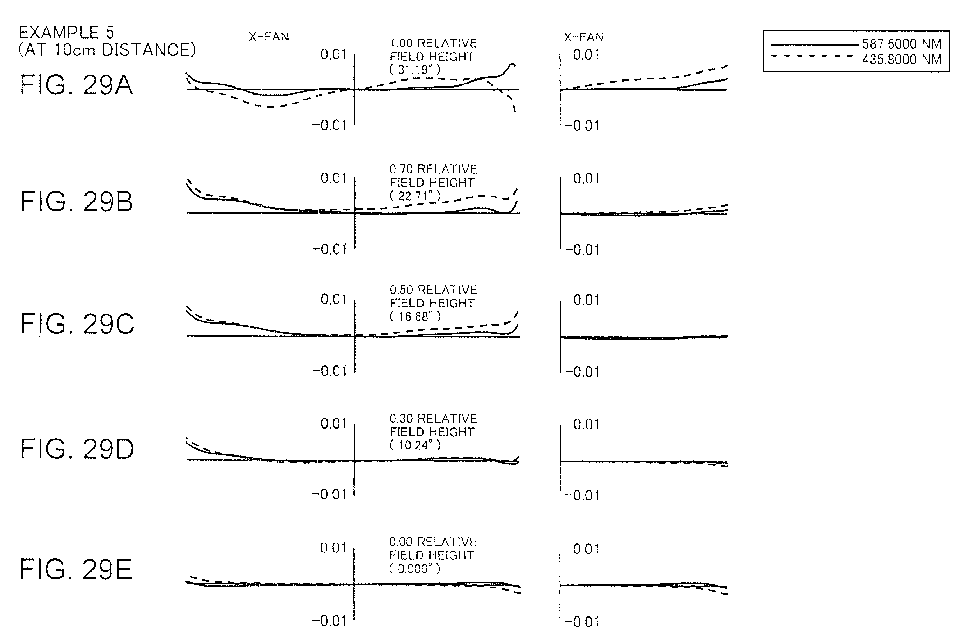

FIG. 9 is a cross sectional view showing a lens configuration of an imaging optical system as Example 5. FIGS. 26A to 26C are longitudinal aberration diagrams of the imaging optical system as Example 5 at an infinite distance. FIGS. 27A to 27E are transverse aberration diagrams of the imaging optical system as Example 5 at an infinite distance. FIGS. 28A to 28C are longitudinal aberration diagrams of the imaging optical system as Example 5 at 10 cm distance. FIGS. 29A to 29E are transverse aberration diagrams of the imaging optical system as Example 5 at 10 cm distance.

As shown in FIG. 9, the imaging optical system 1E as Example 5 is configured such that a first lens element L1, a second lens element L2, a third lens element L3, a fourth lens element L4, and a fifth lens element L5 are disposed in this order from the object side to the image side. In performing a focusing operation, all the first to fifth lens elements L1 to L5 are integrally moved in the optical axis AX direction.

More specifically, in the imaging optical system 1E as Example 5, the first to fifth lens elements L1 to L5 are configured as follows in the order from the object side to the image side.

The first lens element L1 is a biconvex positive lens element having a positive refractive power, the second lens element L2 is a negative meniscus lens element having a negative refractive power with a concave surface toward the image side, the third lens element L3 is a biconvex positive lens element having a positive refractive power with a convex surface toward the image side, the fourth lens element L4 is a positive meniscus lens element having a positive refractive power with a convex surface toward the image side, and the fifth lens element L5 is a biconcave negative lens element. Each of the first to fifth lens elements L1 to L5 has an aspherical shape on both surfaces thereof, and is a resin lens element. The image-side surface of the third lens element L3 has inflection points IPE3 and IPE3 on the profile of a cross section of the third lens element L3 along the optical axis AX (cross section of the third lens element L3 along the optical axis AX and including the optical axis AX) in a direction from the intersection with the optical axis AX toward an end of the effective area of the third lens element L3. The third lens element L3 has a region, in a peripheral area thereof radially away from the optical axis AX by a predetermined distance, having a negative refractive power on the cross section including the optical axis AX. The fourth lens element L4 has inflection points IPE41 and IPE41 on the object-side surface thereof, and has inflection points IPE42 and IPE42 on the image-side surface thereof, on the profile of a cross section of the fourth lens element L4 along the center axis (optical axis AX) in a direction from the intersection with the optical axis AX toward an end of the effective area of the fourth lens element L4. The optical diaphragm ST is disposed on the object side of the first lens element L1. The light receiving surface of the imaging element SR is disposed on the image side of the fifth lens element L5 via a parallel plate FT as a filter.

In the imaging optical system 1E having the aforementioned configuration, light rays incident from the object side successively pass through the optical diaphragm ST, the first lens element L1, the second lens element L2, the third lens element L3, the fourth lens element L4, the fifth lens element L5, and the parallel plate FT along the optical axis AX, and form an optical image of an object on the light receiving surface of the imaging element SR. Then, the imaging element SR converts the optical image into an electrical signal. The electrical signal is processed as necessary as in the case of Example 1.

Construction data of the respective lens elements in the imaging optical system 1E as Example 5 is as follows.

Numerical Data in Example 5

Unit: mm

Lens Surface Data

| lens surface | r | d | nd | νd | ER |
| --- | --- | --- | --- | --- | --- |
| object plane | ∞ | ∞ | | | |
| 1 (aperture) | ∞ | 0.050 | | | 0.93 |
| 2 | ∞ | -0.227 | | | 0.93 |
| 3* | 1.735 | 0.610 | 1.5447 | 56.15 | 1.00 |
| 4* | -14.110 | 0.076 | | | 1.00 |
| 5* | 3.738 | 0.280 | 1.6347 | 23.87 | 1.01 |
| 6* | 1.506 | 0.640 | | | 0.99 |
| 7* | 68.648 | 0.311 | 1.6347 | 23.87 | 1.18 |
| 8* | -392.254 | 0.430 | | | 1.30 |
| 9* | -6.637 | 0.855 | 1.5447 | 56.15 | 1.84 |
| 10* | -1.062 | 0.272 | | | 2.01 |
| 11* | -3.151 | 0.450 | 1.5305 | 55.72 | 2.28 |
| 12* | 1.677 | 0.654 | | | 2.56 |
| 13 | ∞ | 0.300 | 1.51633 | 64.14 | 2.81 |
| 14 | ∞ | 0.400 | | | 2.87 |
| image plane | ∞ | | | | |

Aspherical Surface Data

third surface

K=-1.5659E-02, A4=5.6555E-03, A6=1.0401E-03, A8=-1.1237E-03, A10=1.7913E-02, A12=-2.6040E-02, A14=1.3042E-02

fourth surface

K=6.9310E-01, A4=1.7936E-02, A6=4.7828E-02, A8=-3.7104E-02, A10=-2.7441E-02, A12=3.1369E-02

fifth surface

K=-3.0000E+01, A4=-5.4970E-02, A6=1.4864E-01, A8=-1.2588E-01, A10=-2.2446E-02, A12=7.8447E-02, A14=-2.5722E-02

sixth surface

K=-6.1548E+00, A4=4.8037E-02, A6=5.1166E-02, A8=-2.6692E-02, A10=-6.2688E-03, A12=1.5639E-02, A14=2.2713E-03

seventh surface

K=1.8830E+01, A4=-1.1068E-01, A6=-5.3972E-03, A8=3.9947E-02, A10=2.1315E-02, A12=-1.9017E-02, A14=1.8082E-03

eighth surface

K=-3.0000E+01, A4=-9.4649E-02, A6=3.7997E-03, A8=2.1263E-02, A10=9.6946E-03, A12=-3.2234E-03, A14=-1.1341E-03

ninth surface

K=9.6950E+00, A4=-1.9938E-03, A6=2.0671E-02, A8=-1.1185E-03, A10=-1.6617E-03, A12=2.8696E-04

tenth surface

K=-4.0078E+00, A4=-3.5714E-02, A6=4.6285E-02, A8=-1.1074E-02, A10=6.7028E-04, A12=1.2909E-05

eleventh surface

K=-3.0000E+01, A4=-7.3442E-03, A6=-3.7052E-03, A8=2.1182E-03, A12=-1.7127E-04, A12=-2.5207E-05, A14=2.7919E-06

twelfth surface

K=-1.2145E+01, A4=-3.0881E-02, A6=4.6440E-03, A8=-7.3551E-04, A10=5.2516E-05, A12=-3.9005E-07

Various Data

| | |
|---|---|
| focal length (f) | 4.47 (mm) |
| F-number (Fno) | 2.4 |
| angle of view (2W) | 64.3 (deg) |
| image height (2Y) | 5.712 |
| total length (TL) of lens system | 5.28 (mm) |
| focal length of each lens element: | |
| first lens element L1 | 2.86 |
| second lens element L2 | -4.14 |
| third lens element L3 | 91.18 |
| fourth lens element L4 | 2.19 |
| fifth lens element L5 | -1.99 |

The spherical aberrations (sine condition), astigmatisms, distortion aberrations, and transverse aberrations of the imaging optical system 1E as Example 5 having the aforementioned lens arrangement and construction are shown in FIGS. 26A to 29E.

Table 1 shows values of the conditional expressions (1) to (8) and of the conditional expressions (A1) and (A2) in the case where the conditional expressions are applied to each of the imaging optical systems 1A to 1E as Examples 1 to 5 as described above. Table 1 also shows values of fitting curvature of a region corresponding to 50% of each of the effective areas on the object-side surface and on the image-side surface of the third lens element L3.

[Table 1]

| Conditional expression | Ex1 | Ex2 | Ex3 | Ex4 | Ex5 |
|---|---|---|---|---|---|
| (1) 0.5<f1/f<0.67 | 0.643 | 0.647 | 0.643 | 0.643 | 0.643 |
| (2) 0.30<f4/f<0.65 | 0.456 | 0.615 | 0.523 | 0.475 | 0.493 |
| (3) 1<(R1_L4+R2_L4)/ (R1_L4-R2_L4)<2 | 1.353 | 1.777 | 1.444 | 1.293 | 1.381 |
| (4) 0< \|f4/f3 \| <0.12 | 0.0019 | 0.0460 | 0.0330 | 0.0186 | 0.0239 |
| (5) 15<v2<31 | 23.87 | 23.87 | 23.87 | 23.87 | 23.87 |
| (6) 1.60<Nd2<2.10 | 1.635 | 1.635 | 1.635 | 1.635 | 1.635 |
| (7) 15<v3<31 | 23.87 | 23.87 | 23.87 | 23.87 | 23.87 |
| (8) 1.60<Nd3<2.10 | 1.635 | 1.635 | 1.635 | 1.635 | 1.635 |
| (A1) -0.4<f/R1_L3<0.2 | -0.117 | 0.137 | -0.163 | 0.037 | 0.065 |
| (A2) -0.6<f/R2_L3<0.05 | -0.123 | 0.019 | -0.261 | -0.024 | -0.011 |
| Fitting curvature at 50% object side effective area on lens element L3 | -10.05 | -22.29 | -10.17 | -17.44 | -17.69 |
| Fitting curvature at 50% image side effective area on lens element L3 | -9.82 | -13.92 | -8.03 | -13.73 | -13.44 |

As described above, each of the imaging optical systems 1A to 1E as Examples 1 to 5 is provided with five lens elements, and satisfies the aforementioned conditions. Thus, the imaging optical systems 1A to 1E can advantageously correct various aberrations in a satisfactory manner even at a wide angle of view, while achieving miniaturization, as compared with a conventional optical system. In particular, for instance, as indicated by the encircled portion in FIG. 12B, field curvature is relatively small and is corrected in a satisfactory manner even at a high image height position in macro photography. Further, the imaging optical systems 1A to 1E as Examples 1 to 5 can sufficiently achieve miniaturization, when loaded in the imaging device 21 and in the digital apparatus 3, particularly when loaded in the mobile phone 5. Further, it is possible to apply the imaging optical systems 1A to 1E to a high-pixel imaging element 18.

For instance, in a high-pixel imaging element 18 having pixels in the range from about 5M to 8M pixels e.g. 5 megapixels or 8 megapixels, in the case where the size of the imaging element 18 is fixed, the pixel pitch is narrowed (the pixel area is reduced), as compared with a conventional imaging element. As a result, the imaging optical systems 1A to 1E require a resolution in accordance with the narrowed pixel pitch. In the case where the imaging optical system 1 is evaluated in terms of intended resolution, for instance, in terms of MTF (modulation transfer function), it is necessary to suppress various aberrations in a predetermined range defined by e.g. the device specifications. In the imaging optical systems 1A to 1E as Examples 1 to 5, various aberrations are suppressed in the respective predetermined ranges, as shown in the aberration diagrams. Thus, in the imaging optical system 1A to 1E as Examples 1 to 5, various aberrations are corrected in a satisfactory manner. Accordingly, the imaging optical systems 1A to 1E are advantageously used for the imaging element 18 having pixels in the range from e.g. 5M to 8M pixels.

The specification discloses the aforementioned configurations. The following is a summary of the primary configurations of the embodiment.

An imaging optical system according to an aspect is an imaging optical system including in the order from an object side to an image side: a first lens element having a positive refractive power and convex toward the object side; a second lens element having a negative refractive power and concave toward the image side; a third lens element having a predetermined refractive power; a fourth lens element having a positive refractive power and convex toward the image side; and a fifth lens element having a negative refractive power and concave toward the image side. The imaging optical system satisfies the following conditional expressions (1) and (2). The third lens element has a region, in both of an object-side surface and an image-side surface thereof, configured such that a cross section of the third lens element is located on the object side than an intersection with an optical axis, on the cross section including the optical axis. The third lens element satisfies the following conditional expressions (A1) and (A2). The fourth lens element has an inflection point, on at least one of an object-side surface and an image-side surface thereof, on a profile of a cross section of the fourth lens element along an optical axis in a direction from an intersection with the optical axis toward an end of an effective area of the fourth lens element.

$$0.5 < |f1/f| < 0.67 \qquad \ldots (1)$$

$$0.3 < |f4/f| < 0.63 \qquad \ldots (2)$$

$$-0.4 < f/R1\_L3 < 0.2 \qquad \ldots (A1)$$

$$-0.6 < f/R2\_L3 < 0.05 \qquad \ldots (A2)$$

where

f1: a focal length of the first lens element,
f4: a focal length of the fourth lens element,
f: a focal length of an entirety of the imaging optical system,
R1_L3: a paraxial diameter of the object-side surface of the third lens element, and
R2_L3: a paraxial diameter of the image-side surface of the third lens element.

The thus configured imaging optical system is provided with five lens elements. Providing the first to fifth lens elements with the aforementioned optical characteristics, and disposing the first to fifth lens elements in the order from the object side to the image side as described above makes it possible to correct various aberrations in a satisfactory manner even at a wide angle of view, while achieving miniaturization.

More specifically, the imaging optical system is a telephoto optical system configured such that a positive lens group constituted of the first lens element, the second lens element, the third lens element, and the fourth lens element; and the negative fifth lens element are disposed in this order from the object side. The above configuration is advantageous in shortening the total length of the imaging optical system.

Further, in the imaging optical system, two or more lens elements among the five lens elements are negative lens elements. Accordingly, the number of lens surfaces capable of emanating light is large. Thus, the imaging optical system makes it possible to correct the Petzval sum with ease, and to secure satisfactory imaging performance up to a peripheral portion of a screen.

Further, in the imaging optical system, both of the object-side surface and the image-side surface of the third lens element are configured to have a region, in which the cross section of the third lens element is located on the object side than the intersection with the optical axis, on the cross section including the optical axis. This makes it possible to configure the imaging optical system such that the concave surface of the second lens element and the concave surface of the third lens element face each other to provide substantially the same effect as in the case where the third lens element is a meniscus lens element. Accordingly, the imaging optical system is advantageous in correcting coma aberration generated in a light flux emanating from the image-side surface of the second lens element at a large angle during a focusing operation for an infinite distance object and during a focusing operation for a near distance object, by the object-side surface of the third lens element. Thus, it is possible to correct the coma aberration in a satisfactory manner even at a wide angle of view.

Exceeding the upper limit of the conditional expression (A1) is not preferable in the aspect of securing a region, in which the cross section of the lens element is located on the object side than the intersection with the optical axis, on the cross section of the lens element. This is because exceeding the upper limit of the conditional expression (A1) may increase a local change in curvature, and may increase the performance variation at a low image height position, as a focusing operation is carried out. On the other hand, falling below the lower limit of the conditional expression (A1) is not preferable, because falling below the lower limit of the conditional expression (A1) may excessively increase the refractive power of the third lens element in a paraxial region, and may increase the performance variation at a low image height position, as a focusing operation is carried out.

Further, exceeding the upper limit of the conditional expression (A2) is not preferable in the aspect of securing a region, in which the cross section of the lens element is located on the object side than the intersection with the optical axis, on the cross section of the lens element. This is because exceeding the upper limit of the conditional expression (A2) may increase a local change in curvature, and may increase the performance variation at a low image height position, as a focusing operation is carried out. On the other hand, falling below the lower limit of the conditional expression (A2) is not preferable, because falling below the lower limit of the conditional expression (A2) may excessively increase the refractive power of the third lens element in a paraxial region, and may increase the performance variation at a low image height position, as a focusing operation is carried out.

Further, in the imaging optical system, the fourth lens element is configured to be a lens element having a positive refractive power with a convex surface toward the image side, preferably, a meniscus lens element. This makes it possible to guide an off-axis light ray emanating from the second lens element at a large angle to the fifth lens element, while suppressing an increase in refractive angle at each of the lens surfaces. Thus, the above configuration is advantageous in suppressing off-axis aberration in a satisfactory manner.

Further, in the imaging optical system, one or both surfaces of the fourth lens element have an aspherical shape with the inflection points as described above. Accordingly, the imaging optical system is more advantageous in correcting aberration generated in an off-axis light flux in a satisfactory manner. In the imaging optical system, even in the case where the incident position of off-axis light flux with respect to a lens element varies during a focusing operation, it is possible to suppress a shift in spot position of off-axis light flux in the optical axis direction.

The aforementioned conditional expression (1) is a conditional expression that appropriately sets the focal length of the first lens element, and shortens the total length of the imaging optical system while appropriately correcting aberration. Controlling the value of the conditional expression (1) so that the value does not exceed the upper limit of the conditional expression (1) makes it possible for the imaging optical system to appropriately maintain the refractive power of the first lens element, and to dispose a combined principal point obtained from the first to fourth lens elements at a position closer to the object side, while shortening the total length of the imaging optical system. On the other hand, controlling the value of the conditional expression (1) so that the value does not fall below the lower limit of the conditional expression (1) makes it possible for the imaging optical system to suppress an increase in high-order spherical aberration or coma aberration generated in the first lens element, while suppressing an excessive increase of refractive power of the first lens element.

Further, the conditional expression (2) is a conditional expression that appropriately sets the focal length of the fourth lens element, and appropriately corrects aberration generated in an off-axis light flux. Controlling the value of the conditional expression (2) so that the value does not exceed the upper limit of the conditional expression (2) makes it possible for the imaging optical system to suppress an increase in refractive angle of off-axis light ray with respect to the fifth lens element and to suppress off-axis aberration in a satisfactory manner. On the other hand, controlling the value of the conditional expression (2) so that the value does not fall below the lower limit of the conditional expression (2) makes it possible for the imaging optical system to appropriately control a local change in refractive power of the fourth lens element, resulting from a change in incident position of off-axis light flux with respect to the fourth lens element between a state before a focusing operation is performed and a state after a focusing operation is performed. This is advantageous in correcting a change in spot position of off-axis light ray in the optical axis direction during a focusing operation for an infinite distance object and for a near distance object.

In the thus configured imaging optical system, preferably, the image-side surface of the fifth lens element disposed at a position closest to the image side among the five lens elements may have an aspherical shape. The imaging optical system having the above configuration is advantageous in correcting various aberrations in a peripheral portion of a screen in a satisfactory manner, and is also advantageous in securing telecentricity of image-side light flux.

In the specification, miniaturization means that the imaging optical system satisfies the condition: L/2Y<1 and more desirably, the condition: L/2Y<0.9, where L denotes an optical axis distance from the lens surface of the lens element closest to the object side in the imaging optical system to the image-side focal point, and 2Y denotes a diagonal length of the imaging surface (e.g. a diagonal length of a rectangular effective pixel area in a solid-state imaging element). The image-side focal point indicates an image point to be obtained in the case where a light ray in parallel to the optical axis is incident to the imaging optical system. Further, in the case where a parallel plate member such as an optical low-pass filter, an infrared cut filter, or a seal glass of a solid-state imaging element package is disposed between the lens surface closest to the image side in the imaging optical system, and the image-side focal point, the aforementioned expression is calculated, assuming that the parallel plate member is air.

Further, the inflection point is one (target point) of the points within the effective radius of a lens element and constituting a profile of a cross section of the lens element along an optical axis (a cross section of the lens element along the optical axis and including the optical axis). The inflection point satisfies a requirement that the sign (plus or minus) is inverted at positions anterior and posterior to the target point, in the case where a second order differential is performed on the profile. The effective area is a region defined as a region to be used as a lens portion in terms of optical designing.

Further, in the imaging optical system, preferably, the image-side surface of the third lens element may have an aspherical shape, and may have an inflection point at a position other than the position of the intersection with the optical axis, on a profile of the cross section of the third lens element along the optical axis in a direction from the intersection with the optical axis toward an end of an effective area of the third lens element.

In the thus configured imaging optical system, it is possible to appropriately correct a shift of off-axis light flux in the optical axis direction by providing the inflection point on the image-side surface in addition to the inflection point of the fourth lens element, even in the case where the incident position of off-axis light flux with respect to the lens element varies, as a focusing operation is carried out.

Further, the thus-configured imaging optical system may preferably satisfy the following conditional expression (3):

$$1 < (R1\_L4 + R2\_L4)/(R1\_L4 - R2\_L4) < 2 \qquad \dots (3)$$

where

R1_L4: an on-axis curvature radius of the object-side surface of the fourth lens element, and
R2_L4: an on-axis curvature radius of the image-side surface of the fourth lens element.

The conditional expression (3) defines the shape of the fourth lens element for appropriately correcting a shift in spot position of off-axis light ray in the optical axis direction during a focusing operation for an infinite distance object and during a focusing operation for a near distance object. Controlling the value of the conditional expression (3) so that the value does not exceed the upper limit of the conditional expression (3) makes it possible for the imaging optical system to appropriately control a local change in refractive power resulting from a change in incident position of off-axis light flux with respect to the fourth lens element between a state before a focusing operation is performed and a state after a focusing operation is performed, and to secure satisfactory off-axis performance regardless of the object distance. On the other hand, controlling the value of the conditional expression (3) so that the value does not fall below the lower limit of the conditional expression (3) makes it possible for the imaging optical system to guide an off-axis light ray emanating from the second lens element at a large angle to the fifth lens element, while making the refractive angle at each of the lens elements small. This is more advantageous in suppressing off-axis aberration in a satisfactory manner.

Further, the thus configured imaging optical system may preferably satisfy the following conditional expression (4):

$$0 < |f4/f3| < 0.12 \qquad \dots (4)$$

where

f3: a focal length of the third lens element, and
f4: a focal length of the fourth lens element.

The conditional expression (4) is a conditional expression that appropriately sets the focal lengths of the third lens element and of the fourth lens element, and to secure satisfactory aberration correction. Controlling the value of the conditional expression (4) so that the value does not exceed the upper limit of the conditional expression (4) makes it possible for the imaging optical system to appropriately set the inflection point positions of the third lens element and of the fourth lens element, and to suppress field curvature of off-axis light flux regardless of the object distance.

Further, in the thus configured imaging optical system, preferably, the inflection point of the fourth lens element may be on the image-side surface thereof.

In the thus configured imaging optical system, disposing the inflection point at a position closer to the image side makes it possible to appropriately set the refractive power with respect to off-axis light flux. This is more advantageous in correcting field curvature of off-axis light flux in a satisfactory manner.

Further, in the thus configured imaging optical system, preferably, the inflection point of the fourth lens element may be on the object-side surface and on the image-side surface thereof.

In the thus configured imaging optical system, disposing the inflection point on both surfaces of the fourth lens element makes it possible to correct a change in field curvature resulting from a change in incident position of off-axis light flux with respect to the fourth lens element during a focusing operation, by the image-side surface and the object-side surface of the fourth lens element. This is more advantageous in suppressing a change in spot position of off-axis light flux.

Further, the thus configured imaging optical system may preferably satisfy the following conditional expression (5):

$$15 < v2 < 31 \qquad \ldots (5)$$

where

v2: an Abbe number of the second lens element.

The conditional expression (5) is a conditional expression that appropriately sets the Abbe number of the second lens element. Controlling the value of the conditional expression (5) so that the value does not exceed the upper limit of the conditional expression (5) makes it possible for the imaging optical system to make the degree of decentration of the second lens element to an appropriately large value, and to correct chromatic aberration such as on-axis chromatic aberration or magnification chromatic aberration, while suppressing an excessive increase of refractive power of the second lens element. On the other hand, controlling the value of the conditional expression (5) so that the value does not fall below the lower limit of the conditional expression (5) makes it possible to manufacture the imaging optical system of an easily available material.

Further, the thus configured imaging optical system may preferably satisfy the following conditional expression (6):

$$1.6 < Nd2 < 2.1 \qquad \ldots (6)$$

where

Nd2: a refractive power of the second lens element with respect to d-line light.

The conditional expression (6) is a conditional expression that corrects chromatic aberration and field curvature of the entirety of the imaging optical system in a satisfactory manner. Controlling the value of the conditional expression (6) so that the value does not fall below the lower limit of the conditional expression (6) makes it possible for the imaging optical system to appropriately maintain the refractive power of the second lens element having a relatively large degree of decentration, and to correct chromatic aberration and field curvature in a satisfactory manner. On the other hand, controlling the value of the conditional expression (6) so that the value does not exceed the upper limit of the conditional expression (6) makes it possible to manufacture the imaging optical system of an easily available material.

Further, the thus configured imaging optical system may preferably satisfy the following conditional expression (7):

$$15 < v3 < 31 \qquad \ldots (7)$$

where

v3: an Abbe number of the third lens element.

The conditional expression (7) is a conditional expression that appropriately sets the Abbe number of the third lens element. Controlling the value of the conditional expression (7) so that the value does not exceed the upper limit of the conditional expression (7) makes it possible for the imaging optical system to make the degree of decentration of the third lens element to an appropriately large value, and to correct chromatic aberration such as chromatic aberration or magnification chromatic aberration generated in an off-axis light flux in a satisfactory manner, while suppressing an excessive increase of refractive power of the third lens element. Further, controlling the value of the conditional expression (7) so that the value does not exceed the upper limit of the conditional expression (7) makes it possible for the imaging optical system to appropriately correct on-axis chromatic aberration. On the other hand, controlling the value of the conditional expression (7) so that the value does not fall below the lower limit of the conditional expression (7) makes it possible to manufacture the imaging optical system of an easily available material.

Further, the thus configured imaging optical system may preferably satisfy the following conditional expression (8):

$$1.6 < Nd3 < 2.1 \qquad \ldots (8)$$

where

Nd3: a refractive power of the third lens element with respect to d-line light.

The conditional expression (8) is a conditional expression that corrects the performance of spot position of off-axis light flux in a satisfactory manner regardless of the object distance. Controlling the value of the conditional expression (8) so that the value does not fall below the lower limit of the conditional expression (8) makes it possible for the imaging optical system to appropriately control a local change in refractive power of off-axis light flux at an incident position of off-axis light flux, in the case where the incident position of off-axis light flux with respect to the third lens element varies during a focusing operation. On the other hand, controlling the value of the conditional expression (8) so that the value does not exceed the upper limit of the conditional expression (8) makes it possible to manufacture the imaging optical system of an easily available material.

Further, the thus configured imaging optical system may preferably be further provided with an optical diaphragm disposed on the object side of the first lens element.

In the imaging optical system, disposing the optical diaphragm on the object side of the first lens element makes it possible to set an incident angle of off-axis light flux with respect to the fifth lens element small. This is advantageous in securing telecentricity in a satisfactory manner, while suppressing a change in spot position of off-axis light flux during a focusing operation.

Further, in the thus configured imaging optical system, preferably, the image-side surface of the third lens element may have a region, in a peripheral area thereof radially away from the optical axis by a predetermined distance, having a negative refractive power on the cross section including the optical axis.

In the imaging optical system, providing a region having a negative refractive index in a peripheral portion of the third lens element makes it possible to correct coma aberration and magnification chromatic aberration generated in an off-axis light flux in a satisfactory manner, without the need of irradiating the off-axis light flux from the second lens element at an excessively large angle.

Further, in the thus configured imaging optical system, preferably, all the first to fifth lens elements may be resin lens elements made of a resin material.

According to the above configuration, since a resin lens element is used, it is possible to form the lens element having an intended surface configuration relatively easily, and to reduce the cost. Thus, the imaging optical system is advantageous in implementing a predetermined performance relatively easily, while suppressing the cost.

Further, an imaging device according to another aspect includes the imaging optical system having any one of the aforementioned configurations, and an imaging element which converts an optical image into an electrical signal. The imaging optical system is operable to form an optical image of an object on a light receiving surface of the imaging element.

According to the above configuration, it is possible to provide an imaging device incorporated with the imaging optical system having five lens elements that enables to correct various aberrations in a satisfactory manner even at a wide angle of view, while achieving miniaturization. Thus, the imaging device is advantageous in miniaturization and achieving high-performance.

Further, a digital apparatus according to yet another aspect includes the aforementioned imaging device, and a control section which causes the imaging device to perform at least one of a still image photographing and a moving image photographing of the object. The imaging optical system of the imaging device is assembled in such a manner as to form the optical image of the object on an imaging surface of the imaging element. Preferably, the digital apparatus may include a mobile terminal device.

According to the above configuration, it is possible to provide a digital apparatus or a mobile terminal device incorporated with the imaging optical system having five lens elements that enables to correct various aberrations in a satisfactory manner even at a wide angle of view, while achieving miniaturization. Thus, the digital apparatus or the mobile terminal device is advantageous in miniaturization and achieving high-performance.

This application is based on Japanese Patent Application No. 2011-68209 filed on March 25, 2011, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## INDUSTRIAL APPLICABILITY

According to the invention, it is possible to provide an imaging optical system, an imaging device, and a digital apparatus.

**Claims**

1. An imaging optical system, comprising in the order from an object side to an image side:

   a first lens element having a positive refractive power and convex toward the object side;
   a second lens element having a negative refractive power and concave toward the image side;
   a third lens element having a predetermined refractive power;
   a fourth lens element having a positive refractive power and convex toward the image side; and
   a fifth lens element having a negative refractive power and concave toward the image side, wherein
   the imaging optical system satisfies the following conditional expressions (1) and (2),
   the third lens element has a region, in both of an object-side surface and an image-side surface thereof, configured such that a cross section of the third lens element is located on the object side than an intersection with an optical axis, on the cross section including the optical axis, the third lens element satisfying the following conditional expressions (A1) and (A2), and
   the fourth lens element has an inflection point, on at least one of an object-side surface and an image-side surface thereof, on a profile of a cross section of the fourth lens element along an optical axis in a direction from an intersection with the optical axis toward an end of an effective area of the fourth lens element,

$$0.5 < |f1/f| < 0.67 \qquad \ldots (1)$$

$$0.3 < |f4/f| < 0.63 \qquad \ldots (2)$$

$$-0.4 < f/R1\_L3 < 0.2 \qquad \ldots (A1)$$

$$-0.6 < f/R2\_L3 < 0.05 \qquad \ldots (A2)$$

   where

   f1: a focal length of the first lens element,
   f4: a focal length of the fourth lens element,
   f: a focal length of an entirety of the imaging optical system,
   R1_L3: a paraxial diameter of the object-side surface of the third lens element, and
   R2_L3: a paraxial diameter of the image-side surface of the third lens element.

2. The imaging optical system according to Claim 1, wherein
   the image-side surface of the third lens element has an aspherical shape, and has an inflection point at a position other than the position of the intersection with the optical axis, on a profile of the cross section of the third lens element along the optical axis in a direction from the intersection with the optical axis toward an end of an effective area of the third lens element.

3. The imaging optical system according to Claim 1 or 2, wherein
   the imaging optical system satisfies the following conditional expression (3):

$$1 < (R1\_L4 + R2\_L4)/(R1\_L4 - R2\_L4) < 2 \qquad \ldots (3)$$

   where

   R1_L4: an on-axis curvature radius of the object-side surface of the fourth lens element, and
   R2_L4: an on-axis curvature radius of the image-side surface of the fourth lens element.

4. The imaging optical system according to any one of Claims 1 to 3, wherein the imaging optical system satisfies the following conditional expression (4):

$$0< | f4/f3 | <0.12 \qquad \dots (4)$$

where

f3: a focal length of the third lens element, and
f4: a focal length of the fourth lens element.

5. The imaging optical system according to any one of Claims 1 to 4, wherein the inflection point of the fourth lens element is on the image-side surface thereof.

6. The imaging optical system according to any one of Claims 1 to 4, wherein the inflection point of the fourth lens element is on the object-side surface and on the image-side surface thereof.

7. The imaging optical system according to any one of Claims 1 to 6, wherein the imaging optical system satisfies the following conditional expression (5):

$$15<v2<31 \qquad \dots (5)$$

where

v2: an Abbe number of the second lens element.

8. The imaging optical system according to any one of Claims 1 to 7, wherein the imaging optical system satisfies the following conditional expression (6):

$$1.6<Nd2<2.1 \qquad \dots (6)$$

where

Nd2: a refractive power of the second lens element with respect to d-line light.

9. The imaging optical system according to any one of Claims 1 to 8, wherein the imaging optical system satisfies the following conditional expression (7):

$$15<v3<31 \qquad \dots (7)$$

where

v3: an Abbe number of the third lens element.

10. The imaging optical system according to any one of Claims 1 to 9, wherein the imaging optical system satisfies the following conditional expression (8):

$$1.6<Nd3<2.1 \qquad \dots (8)$$

where

Nd3: a refractive power of the third lens element with respect to d-line light.

11. The imaging optical system according to any one of Claims 1 to 10, further comprising:

an optical diaphragm disposed on the object side of the first lens element.

**12.** The imaging optical system according to any one of Claims 1 to 11, wherein
the image-side surface of the third lens element has a region, in a peripheral area thereof radially away from the optical axis by a predetermined distance, having a negative refractive power on the cross section including the optical axis.

**13.** The imaging optical system according to any one of Claims 1 to 12, wherein
all the first to fifth lens elements are resin lens elements made of a resin material.

**14.** An imaging device, comprising:

the imaging optical system of any one of Claims 1 to 13; and
an imaging element which converts an optical image into an electrical signal, wherein
the imaging optical system is operable to form an optical image of an object on a light receiving surface of the imaging element.

**15.** A digital apparatus, comprising:

the imaging device of Claim 14; and
a control section which causes the imaging device to perform at least one of a still image photographing and a moving image photographing of the object, wherein
the imaging optical system of the imaging device is assembled in such a manner as to form the optical image of the object on an imaging surface of the imaging element.

**16.** The digital apparatus according to Claim 15, wherein
the digital apparatus includes a mobile terminal device.

## FIG. 1

EP 2 690 479 A1

# FIG. 2

DEFINITION OF IMAGE
PLANE INCIDENT ANGLE

IMAGE PLANE

EXIT PUPIL
POSITION

PLUS
DIRECTION
OF $\alpha$

PRIMARY RAY
CORRESPONDING
TO MAXIMUM
IMAGE HEIGHT

OPTICAL AXIS

# FIG. 3

## FIG. 4A

5

51

52

53    55

56

## FIG. 4B

5

51

21(30)

## FIG. 5

1A

r13  r14

r11*  r12*

r10*

r9*

r3*  r5*  r7*

r2  r4* r6*   r8*

r1

AX

OBJECT
SIDE

ST

L1

L2

L3

IPA3

IPA41

IPA42

L4

L5

FT

SR

FIG. 6    1B

FIG. 7    1C

EP 2 690 479 A1

41

FIG. 8

1D

FIG. 9

1E

r13 r14

r11* r12*

r10*

r9*

r3* r5* r7* r8*
r2 r4* r6*
r1

AX
OBJECT
SIDE

ST
L1
L2 IPD3
L3 IPD41
L4
IPD42
L5
FT
SR

r13 r14

r11* r12*

r10*

r9*

r3* r5* r7*
r2 r4* r6* r8*
r1

AX
OBJECT
SIDE

ST
L1
L2 IPE3
L3 IPE41
L4
IPE42
L5
FT
SR

EP 2 690 479 A1

# FIG. 10A

EXAMPLE 1 (AT INFINITE DISTANCE)

SPHERICAL
ABERRATION

# FIG. 10B

ASTIGMATISM

# FIG. 10C

DISTORTION
ABERRATION

EP 2 690 479 A1

587,6000 NM
435,8000 NM

EXAMPLE 1
(AT INFINITE DISTANCE)

FIG. 11A

X-FAN

1.00 RELATIVE
FIELD HEIGHT
( 33.00° )

X-FAN

587.6000 NM
435.8000 NM

FIG. 11B

0.70 RELATIVE
FIELD HEIGHT
( 24.46° )

FIG. 11C

0.50 RELATIVE
FIELD HEIGHT
( 18.13° )

FIG. 11D

0.30 RELATIVE
FIELD HEIGHT
( 11.18° )

FIG. 11E

0.00 RELATIVE
FIELD HEIGHT
( 0.000° )

EP 2 690 479 A1

# FIG. 12A

EXAMPLE 1 (AT 10cm DISTANCE)

SPHERICAL
ABERRATION

# FIG. 12B

ASTIGMATISM

# FIG. 12C

DISTORTION
ABERRATION

| | 587.6000 NM |
|---|---|
| | 435.8000 NM |

IMAGE HEIGHT(mm)

FOCUS POSITION
DEVIATION (mm)

FOCUS POSITION
DEVIATION (mm)

DISTORTION (%)

EP 2 690 479 A1

EXAMPLE 1
(AT 10cm DISTANCE)

FIG. 13A

FIG. 13B

FIG. 13C

FIG. 13D

FIG. 13E

X-FAN

X-FAN

——— 587.6000 NM
- - - - - 435.8000 NM

0.01
-0.01

1.00 RELATIVE
FIELD HEIGHT
( 32.06° )

0.01
-0.01

0.01
-0.01

0.70 RELATIVE
FIELD HEIGHT
( 43.42° )

0.01
-0.01

0.01
-0.01

0.50 RELATIVE
FIELD HEIGHT
( 17.25° )

0.01
-0.01

0.01
-0.01

0.30 RELATIVE
FIELD HEIGHT
( 10.59° )

0.01
-0.01

0.01
-0.01

0.00 RELATIVE
FIELD HEIGHT
( 0.000° )

0.01
-0.01

EP 2 690 479 A1

# FIG. 14A

# FIG. 14B

# FIG. 14C

EXAMPLE 2 (AT INFINITE DISTANCE)

——————— 587.6000 NM
- - - - - - 435.8000 NM

SPHERICAL
ABERRATION

ASTIGMATISM

DISTORTION
ABERRATION

IMAGE HEIGHT(mm)

IMAGE HEIGHT(mm)

Y    X ┬ 3.01

┬ 3.01

1.00

0.75

2.25

2.25

0.50

1.50

1.50

0.25

0.75

0.75

-0.100 -0.050 0.0  0.050  0.100

-0.100 -0.050 0.0  0.050  0.100

-2.0  -0.1  0.0  1.0  2.0

FOCUS POSITION
DEVIATION (mm)

FOCUS POSITION
DEVIATION (mm)

DISTORTION (%)

EP 2 690 479 A1

EXAMPLE 2
(AT INFINITE DISTANCE)

X-FAN

X-FAN

587.6000 NM
435.8000 NM

FIG. 15A

0.01

1.00 RELATIVE
FIELD HEIGHT
( 33.00° )

0.01

-0.01

-0.01

FIG. 15B

0.01

0.70 RELATIVE
FIELD HEIGHT
( 24.44° )

0.01

-0.01

-0.01

FIG. 15C

0.01

0.50 RELATIVE
FIELD HEIGHT
( 18.07° )

0.01

-0.01

-0.01

FIG. 15D

0.01

0.30 RELATIVE
FIELD HEIGHT
( 11.17° )

0.01

-0.01

-0.01

FIG. 15E

0.01

0.00 RELATIVE
FIELD HEIGHT
( 0.000° )

0.01

-0.01

-0.01

# FIG. 16A

EXAMPLE 2 (AT 10cm DISTANCE)

SPHERICAL
ABERRATION

# FIG. 16B

ASTIGMATISM

# FIG. 16C

587.6000 NM
- - - - - 435.8000 NM

DISTORTION
ABERRATION

IMAGE HEIGHT(mm)

IMAGE HEIGHT(mm)

FOCUS POSITION
DEVIATION (mm)

FOCUS POSITION
DEVIATION (mm)

DISTORTION (%)

EP 2 690 479 A1

EXAMPLE 2
(AT 10cm DISTANCE)

FIG. 17A

FIG. 17B

FIG. 17C

FIG. 17D

FIG. 17E

X-FAN

0.01

-0.01

1.00 RELATIVE
FIELD HEIGHT
( 32.09° )

0.70 RELATIVE
FIELD HEIGHT
( 23.41° )

0.50 RELATIVE
FIELD HEIGHT
( 17.20° )

0.30 RELATIVE
FIELD HEIGHT
( 10.59° )

0.00 RELATIVE
FIELD HEIGHT
( 0.000° )

X-FAN

0.01

-0.01

587.6000 NM
435.8000 NM

EP 2 690 479 A1

# FIG. 18A

EXAMPLE 3 (AT INFINITE DISTANCE)

SPHERICAL
ABERRATION

1.00

0.75

0.50

0.25

-0.100 -0.050 0.0 0.050 0.100

FOCUS POSITION
DEVIATION (mm)

# FIG. 18B

ASTIGMATISM

IMAGE HEIGHT(mm)

Y  X  2.86

2.14

1.43

0.71

-0.100 -0.050 0.0 0.050 0.100

FOCUS POSITION
DEVIATION (mm)

# FIG. 18C

587.6000 NM
435.8000 NM

DISTORTION
ABERRATION

IMAGE HEIGHT(mm)

2.86

2.14

1.43

0.71

-2.0 -0.1 0.0 1.0 2.0

DISTORTION (%)

EXAMPLE 3
(AT INFINITE DISTANCE)

FIG. 19A

FIG. 19B

FIG. 19C

FIG. 19D

FIG. 19E

X-FAN

1.00 RELATIVE FIELD HEIGHT ( 32.18° )

0.70 RELATIVE FIELD HEIGHT ( 23.79° )

0.50 RELATIVE FIELD HEIGHT ( 17.60° )

0.30 RELATIVE FIELD HEIGHT ( 10.85° )

0.00 RELATIVE FIELD HEIGHT ( 0.000° )

——— 587.6000 NM
- - - - 435.8000 NM

EP 2 690 479 A1

# FIG. 20A

EXAMPLE 3 (AT 10cm DISTANCE)

SPHERICAL
ABERRATION

# FIG. 20B

ASTIGMATISM

IMAGE HEIGHT(mm)

# FIG. 20C

DISTORTION
ABERRATION

| 587.6000 NM |
| - - - - - - 435.8000 NM |

IMAGE HEIGHT(mm)

FOCUS POSITION
DEVIATION (mm)

FOCUS POSITION
DEVIATION (mm)

DISTORTION (%)

EP 2 690 479 A1

EXAMPLE 3
(AT 10cm DISTANCE)

587.6000 NM
435.8000 NM

X-FAN

FIG. 21A — 1.00 RELATIVE FIELD HEIGHT ( 31.19° )

FIG. 21B — 0.70 RELATIVE FIELD HEIGHT ( 22.69° )

FIG. 21C — 0.50 RELATIVE FIELD HEIGHT ( 16.68° )

FIG. 21D — 0.30 RELATIVE FIELD HEIGHT ( 10.23° )

FIG. 21E — 0.00 RELATIVE FIELD HEIGHT ( 0.000° )

X-FAN

0.01    −0.01

54

# FIG. 22A

EXAMPLE 4 (AT INFINITE DISTANCE)

SPHERICAL
ABERRATION

1.00

0.75

0.50

0.25

-0.100  -0.050  0.0  0.050  0.100

FOCUS POSITION
DEVIATION (mm)

# FIG. 22B

ASTIGMATISM

IMAGE HEIGHT(mm)

Y  X  2.86

2.14

1.43

0.71

-0.100  -0.050  0.0  0.050  0.100

FOCUS POSITION
DEVIATION (mm)

# FIG. 22C

DISTORTION
ABERRATION

| | 587.6000 NM |
| --- | --- |
| | 435.8000 NM |

IMAGE HEIGHT(mm)

2.86

2.14

1.43

0.71

-2.0  -0.1  0.0  1.0  2.0

DISTORTION (%)

EP 2 690 479 A1

EXAMPLE 4
(AT INFINITE DISTANCE)

FIG. 23A

FIG. 23B

FIG. 23C

FIG. 23D

FIG. 23E

X-FAN
0.01

-0.01

1.00 RELATIVE
FIELD HEIGHT
( 32.14° )

X-FAN
0.01

-0.01

0.01

-0.01

0.70 RELATIVE
FIELD HEIGHT
( 23.76° )

0.01

-0.01

0.01

-0.01

0.50 RELATIVE
FIELD HEIGHT
( 17.56° )

0.01

-0.01

0.01

-0.01

0.30 RELATIVE
FIELD HEIGHT
( 10.82° )

0.01

-0.01

0.01

-0.01

0.00 RELATIVE
FIELD HEIGHT
( 0.000° )

0.01

-0.01

587.6000 NM
435.8000 NM

EP 2 690 479 A1

# FIG. 24A

EXAMPLE 4 (AT 10cm DISTANCE)

SPHERICAL
ABERRATION

# FIG. 24B

ASTIGMATISM

IMAGE HEIGHT(mm)

# FIG. 24C

DISTORTION
ABERRATION

| | 587.6000 NM |
| --- | --- |
| | 435.8000 NM |

IMAGE HEIGHT(mm)

-0.100 -0.050 0.0 0.050 0.100

FOCUS POSITION
DEVIATION (mm)

-0.100 -0.050 0.0 0.050 0.100

FOCUS POSITION
DEVIATION (mm)

-2.0 -0.1 0.0 1.0 2.0

DISTORTION (%)

EP 2 690 479 A1

EXAMPLE 4
(AT 10cm DISTANCE)

X-FAN

X-FAN

587.6000 NM
435.8000 NM

FIG. 25A

0.01

1.00 RELATIVE
FIELD HEIGHT
( 31.15° )

0.01

-0.01

-0.01

FIG. 25B

0.01

0.70 RELATIVE
FIELD HEIGHT
( 22.69° )

0.01

-0.01

-0.01

FIG. 25C

0.01

0.50 RELATIVE
FIELD HEIGHT
( 16.66° )

0.01

-0.01

-0.01

FIG. 25D

0.01

0.30 RELATIVE
FIELD HEIGHT
( 10.22° )

0.01

-0.01

-0.01

FIG. 25E

0.01

0.00 RELATIVE
FIELD HEIGHT
( 0.000° )

0.01

-0.01

-0.01

FIG. 26A
FIG. 26B
FIG. 26C

EXAMPLE 5 (AT INFINITE DISTANCE)

587.6000 NM
435.8000 NM

SPHERICAL ABERRATION

ASTIGMATISM

DISTORTION ABERRATION

EP 2 690 479 A1

EXAMPLE 5
(AT INFINITE DISTANCE)

FIG. 27A

X-FAN

0.01

1.00 RELATIVE
FIELD HEIGHT
( 32.16° )

-0.01

X-FAN

0.01

-0.01

FIG. 27B

0.01

0.70 RELATIVE
FIELD HEIGHT
( 23.77° )

-0.01

0.01

-0.01

FIG. 27C

0.01

0.50 RELATIVE
FIELD HEIGHT
( 17.58° )

-0.01

0.01

-0.01

FIG. 27D

0.01

0.30 RELATIVE
FIELD HEIGHT
( 10.83° )

-0.01

0.01

-0.01

FIG. 27E

0.01

0.00 RELATIVE
FIELD HEIGHT
( 0.000° )

-0.01

0.01

-0.01

587.6000 NM
435.8000 NM

## FIG. 28A

## FIG. 28B

## FIG. 28C

EXAMPLE 5 (AT 10cm DISTANCE)

SPHERICAL
ABERRATION

ASTIGMATISM

DISTORTION
ABERRATION

587.6000 NM
435.8000 NM

IMAGE HEIGHT(mm)

IMAGE HEIGHT(mm)

Y  X  2.86

2.86

1.00

0.75

2.14

2.14

0.50

1.43

1.43

0.25

0.71

0.71

-0.100  -0.050  0.0  0.050  0.100

-0.100  -0.050  0.0  0.050  0.100

-2.0  -0.1  0.0  1.0  2.0

FOCUS POSITION
DEVIATION (mm)

FOCUS POSITION
DEVIATION (mm)

DISTORTION (%)

EP 2 690 479 A1

EP 2 690 479 A1

EXAMPLE 5
(AT 10cm DISTANCE)

FIG. 29A

FIG. 29B

FIG. 29C

FIG. 29D

FIG. 29E

X-FAN

X-FAN

1.00 RELATIVE
FIELD HEIGHT
( 31.19° )

0.70 RELATIVE
FIELD HEIGHT
( 22.71° )

0.50 RELATIVE
FIELD HEIGHT
( 16.68° )

0.30 RELATIVE
FIELD HEIGHT
( 10.24° )

0.00 RELATIVE
FIELD HEIGHT
( 0.000° )

587.6000 NM
435.8000 NM

<div align="center">

**INTERNATIONAL SEARCH REPORT**

</div>

| | International application No. |
|---|---|
| | PCT/JP2012/001540 |

**A. CLASSIFICATION OF SUBJECT MATTER**
*G02B13/02*(2006.01)i, *G02B13/18*(2006.01)i

According to International Patent Classification (IPC) or to both national classification and IPC

**B. FIELDS SEARCHED**

Minimum documentation searched (classification system followed by classification symbols)
G02B13/02, G02B13/18

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-224521 A (Konica Minolta Opto, Inc.), 07 October 2010 (07.10.2010), examples 1 to 11 & US 2010/0220229 A1 & CN 101819315 A | 1-16 |
| A | WO 2010/024198 A1 (Konica Minolta Opto, Inc.), 04 March 2010 (04.03.2010), examples 1 to 13 & EP 2317360 A1 & EP 2357505 A2 & CN 102132188 A & KR 10-2011-0042382 A | 1-16 |
| A | JP 2010-197665 A (Olympus Corp.), 09 September 2010 (09.09.2010), examples 1 to 7 & US 2010/0214467 A1 | 1-16 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 March, 2012 (29.03.12) | 10 April, 2012 (10.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/001540 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2010-152042 A  (Optical Logic Inc.), 08 July 2010 (08.07.2010), numerical examples 1 to 5 & WO 2010/073522 A1 | 1-16 |
| A | JP 2010-256608 A  (Konica Minolta Opto, Inc.), 11 November 2010 (11.11.2010), examples 1 to 6 (Family: none) | 1-16 |
| A | JP 2010-237407 A  (Kantatsu Co., Ltd.), 21 October 2010 (21.10.2010), examples 1 to 6 & WO 2010/113717 A1 | 1-16 |
| A | JP 2010-262269 A  (Fujifilm Corp.), 18 November 2010 (18.11.2010), examples 1 to 6 & US 2010/0254029 A1    & CN 201508432 U | 1-16 |
| A | JP 2010-262270 A  (Fujifilm Corp.), 18 November 2010 (18.11.2010), examples 1 to 21 & US 2010/0253829 A1    & CN 201440183 U | 1-16 |
| A | JP 2010-079296 A  (Konica Minolta Opto, Inc.), 08 April 2010 (08.04.2010), examples 6, 7 & US 2010/0053776 A1 | 1-16 |
| P,A | JP 2011-141396 A  (Tamron Co., Ltd.), 21 July 2011 (21.07.2011), examples 1 to 6 & US 2011/0164327 A1 | 1-16 |
| P,A | JP 2011-257447 A  (Sony Corp.), 22 December 2011 (22.12.2011), examples 1 to 3 (Family: none) | 1-16 |
| P,A | JP 2011-257448 A  (Sony Corp.), 22 December 2011 (22.12.2011), examples 1 to 5 (Family: none) | 1-16 |
| P,A | JP 2011-095513 A  (Optical Logic Inc.), 12 May 2011 (12.05.2011), numerical examples 1 to 4 & WO 2011/052444 A1 | 1-16 |
| P,A | JP 2012-037763 A  (Nalux Co., Ltd.), 23 February 2012 (23.02.2012), examples 1 to 8 (Family: none) | 1-16 |

Form PCT/ISA/210 (continuation of second sheet) (July 2009)

**INTERNATIONAL SEARCH REPORT**

International application No.

PCT/JP2012/001540

C (Continuation).　DOCUMENTS CONSIDERED TO BE RELEVANT

| Category* | Citation of document, with indication, where appropriate, of the relevant passages | Relevant to claim No. |
|---|---|---|
| P,A | JP 2012-008164 A  (Olympus Corp.),<br>12 January 2012 (12.01.2012),<br>examples 1 to 8<br>(Family: none) | 1-16 |
| P,A | JP 2011-209554 A  (Fujifilm Corp.),<br>20 October 2011 (20.10.2011),<br>examples 1 to 13<br>(Family: none) | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007 A
- JP 264180 A
- JP 2007279282 A
- JP 2007264180 A

- JP 2010224521 A
- WO 2011004467 A
- JP 2011068209 A